(19) **Europäisches Patentamt / European Patent Office / Office européen des brevets**

(11) **EP 4 377 637 B1**

(12) **FASCICULE DE BREVET EUROPEEN**

(45) Date de publication et mention de la délivrance du brevet:
**12.11.2025 Bulletin 2025/46**

(21) Numéro de dépôt: **22744785.1**

(22) Date de dépôt: **26.07.2022**

(51) Classification Internationale des Brevets (IPC):
*G01L 11/02* (2006.01)    *G01K 11/3206* (2021.01)
*G01L 9/00* (2006.01)    *G01D 5/353* (2006.01)

(52) Classification Coopérative des Brevets (CPC):
**G01D 5/35374; G01K 11/3206; G01L 9/0032; G01L 11/025**

(86) Numéro de dépôt international:
**PCT/EP2022/070949**

(87) Numéro de publication internationale:
**WO 2023/006750 (02.02.2023 Gazette 2023/05)**

(54) **PROCÉDÉ DE MESURE NON INTRUSIVE DE LA VARIATION DE PRESSION INTERNE D'UN TUYAU, DISPOSITIF DE MESURE ET INSTALLATION ASSOCIÉS**

VERFAHREN ZUR NICHT-INVASIVEN MESSUNG DER ÄNDERUNG DES INNENDRUCKS EINES ROHRES, MESSGERÄT UND ANORDNUNG HIERZU

METHOD OF NON-INVASIVELY MEASURING THE VARIATION OF THE INTERNAL PRESSURE OF A PIPE, MEASURING DEVICE AND ARRANGEMENT THEREFOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.07.2021 FR 2108269**

(43) Date de publication de la demande:
**05.06.2024 Bulletin 2024/23**

(73) Titulaire: **Commissariat à l'Energie Atomique et aux Energies Alternatives
75015 Paris (FR)**

(72) Inventeur: **MAURIN, Laurent
91191 Gif-sur-Yvette Cedex (FR)**

(74) Mandataire: **Santarelli
Tour Trinity
1 bis Esplanade de la Défense
92035 Paris La Défense Cedex (FR)**

(56) Documents cités:
**US-A- 2 420 148        US-A- 3 645 136
US-A1- 2012 099 097     US-B1- 6 957 588**

**Description**

**DOMAINE TECHNIQUE**

La présente invention concerne un procédé de mesure d'une variation d'une pression interne et/ou d'une variation de température d'un tuyau.

L'invention s'applique au domaine de l'instrumentation, et plus précisément à la mesure non intrusive d'une variation de pression hydrostatique régnant à l'intérieur d'un tuyau depuis son extérieur.

**ÉTAT DE LA TECHNIQUE ANTÉRIEUR**

Il existe un besoin de réaliser une mesure non intrusive d'une variation de pression hydrostatique régnant à l'intérieur d'un tuyau depuis son extérieur. Un tel tuyau est, par exemple, un pipeline servant au transport d'hydrocarbures, un circuit primaire ou secondaire d'un réacteur nucléaire, un réseau d'alimentation en fluide (liquide ou gaz) sous pression (site industriel, agglomération, machine, etc.), ou encore un réservoir cylindrique sous pression, par exemple utilisé pour le stockage d'un fluide (e.g. : hydrogène) sous haute pression.

Le document FR 2 864 202 B1 décrit un procédé de mesure d'une variation de la pression interne d'un tuyau mettant en œuvre des capteurs configurés pour mesurer une variation de déformation totale du tuyau (comprenant une composante mécanique de déformation et une composante thermique de déformation), et un capteur additionnel pour déterminer la composante thermique de variation de déformation et ainsi la soustraire de la mesure de variation de déformation totale.

Un tel capteur additionnel est collé sur un échantillon réalisé dans le même matériau que le tuyau, distinct de ce dernier, et soumis à la même température que ledit tuyau, de sorte que les variations de déformations totales mesurées par le capteur additionnel ne comprennent pas de composante mécanique de déformation.

La variation de la pression interne est calculée à partir de la composante mécanique de variation de déformation obtenue par soustraction de la composante thermique de la variation de déformation totale.

Le document US 2 420 148 A décrit aussi un tel procédé. Pour mesurer la pression d'un fluide dans un tuyau, des jauges de contrainte mesurent la déformation du tuyau vers l'extérieur en réponse à la pression intérieure. Un capteur additionnel de température est prévu pour compenser la température.

Néanmoins, un tel procédé de mesure ne donne pas entière satisfaction.

En effet, la mise en œuvre d'un tel capteur additionnel ne permet pas de compenser de manière satisfaisante les effets thermiques sur les capteurs de mesure de la variation de déformation mécanique du tuyau sous pression, et présente certains défauts qui conduisent à introduire un biais dans la mesure de variation de pression, qu'il est difficile de corriger.

D'abord, le procédé de l'état de la technique requiert au moins trois mesures indépendantes, ce qui multiplie les sources d'incertitudes.

Ensuite, il s'avère difficile, voire impossible, de se procurer un échantillon du matériau constituant le tuyau d'une installation déjà existante, en vue de déterminer la composante thermique de la variation de déformation totale. Or, il est primordial que l'échantillon présente le même coefficient d'expansion thermique que celui du tuyau, de façon à ce que la composante thermique de la variation de déformation totale puisse lui être retranchée de manière suffisamment parfaite dans toute la gamme de température considérée.

En outre, le recours à un tel capteur additionnel, du fait même de son inertie thermique, différente de celle des capteurs de déformation positionnés sur le tuyau (en particulier à cause de la présence de fluide sous pression à l'intérieur de celui-ci), introduit un délai variable dans la compensation des effets thermiques, et donc une erreur systématique de mesure dès lors que la température varie, même de façon lente.

Or dans le cadre de telles applications, où les températures peuvent varier de plusieurs dizaines de degrés Celsius, la composante mécanique de la déformation totale peut être occultée par un signal d'origine thermique devenant dominant, et il est dans un tel cas impossible de réaliser une mesure fiable de variation de pression.

Ainsi, par exemple, lorsque les capteurs de déformation sont des réseaux de Bragg collés en surface d'un tuyau en acier austénitique de diamètre 4 pouces en Schedule 160 (épaisseur de paroi de 13,49 mm), présentant un coefficient d'expansion thermique de l'ordre de $16,4 \times 10^{-6}$ K$^{-1}$ (par kelvin), une incertitude de température d'un kelvin se traduit par une erreur de 28 bar sur la mesure de la variation de pression interne.

Un but de l'invention est donc de proposer un procédé de mesure de la variation de la pression interne et/ou d'une température d'un tuyau qui soit moins affecté par les effets des variations des déformations thermiques (induites par les variations de température, ou mécanique dans le cas de mesure de température) lors du calcul de la variation de la déformation mécanique / de la température du tuyau, aboutissant à une estimation plus fiable de la variation de la pression interne et/ou de la température du tuyau.

## EXPOSÉ DE L'INVENTION

À cet effet, l'invention a pour objet un procédé tel que défini dans la revendication 1. Ce procédé de mesure d'une variation d'une pression interne d'un tuyau comportant une portion s'étendant le long d'un axe longitudinal comprend, entre autres, les étapes :

- pour chacune parmi au moins deux zones de mesure de la portion du tuyau, mesure, au moyen d'un capteur correspondant, d'une grandeur de suivi associée à une direction de mesure respective, une variation relative de la grandeur de suivi étant représentative d'une variation d'une déformation locale correspondante du tuyau suivant la direction de mesure associée ; et
- calcul de la variation de la pression interne du tuyau à partir d'au moins une variation de déformation, chaque variation de déformation étant uniquement obtenue à partir de grandeurs de suivi mesurées, parmi lesquelles au moins une première grandeur de suivi mesurée est associée à une première direction de mesure et au moins une deuxième grandeur de suivi mesurée est associée à une deuxième direction de mesure,

la première direction de mesure définissant un premier angle avec un plan normal à l'axe longitudinal, la deuxième direction de mesure définissant un deuxième angle avec un plan normal à l'axe longitudinal, le premier angle et le deuxième angle présentant des valeurs absolues différentes modulo $\pi$,

les capteurs étant choisis de sorte qu'une même variation de température se traduise par une même variation relative de leurs grandeurs de suivi mesurées respectives.

On notera que bien entendu les au moins deux zones de mesure peuvent être distinctes ou confondues sans que l'on sorte du cadre de l'invention, étant entendu que, comme le requiert l'invention, le premier angle et le deuxième angle présentent des valeurs absolues différentes modulo $\pi$.

En effet, un tel procédé de mesure exploite la propriété intrinsèque du tuyau sous contrainte hydrostatique à présenter deux sensibilités en déformations mécaniques significativement différentes selon sa longueur (déformation mécanique longitudinale) et sa circonférence (déformation mécanique orthoradiale).

Ainsi, les grandeurs de suivi mesurées pour deux angles de mesure différents sont représentatives de variations de déformations mécaniques différentes.

En revanche, la contribution de la variation de température à sa variation de déformation totale peut être considérée identique pour chacune des zones de mesures du tuyau.

Or, les capteurs sont choisis de façon à présenter une sensibilité en température identique (c'est-à-dire une même variation relative de leur grandeur de suivi respective pour une même variation de température). Ainsi, une simple soustraction mettant en œuvre les grandeurs de suivi pour deux angles de mesure différents supprime la dépendance en température de la mesure de la variation de déformation totale, ce qui conduit directement à une mesure de variation de la composante mécanique de déformation du tuyau sous pression.

Ainsi, dans l'hypothèse où le tuyau reste dans son domaine élastique, et par application de la loi de Hooke, obtenir la variation de la composante mécanique de déformation revient à calculer une variation de la pression interne, totalement indépendante des effets de la variation de température, dès lors que la variation de l'effort longitudinal additionnel et la variation de la pression externe sont connues, ou jugées négligeables. Une autre hypothèse est que le tuyau est fermé à chacune de ses extrémités (formant ainsi un réservoir sous pression), ce qui, en pratique, est toujours le cas.

Ainsi, grâce au procédé de mesure objet de l'invention, le problème de la dépendance en température de la mesure de la variation de déformation du tuyau (et celui de la dépendance à la déformation du tuyau de la mesure de variation température) est résolu de façon intrinsèque, fournissant de manière duale l'information de variation de température de contact indépendamment de la variation de pression, et de plus, ce procédé peut être mis en œuvre au moyen de seulement deux capteurs.

De manière plus générale encore, compte tenu du principe sur lequel se base la compensation des effets thermiques, tout effet externe autre que celui de la température, perturbant lui aussi de façon identique la mesure de chacun des capteurs, est par ce moyen éliminé, ou *a minima* très fortement atténué, de façon totalement intrinsèque. De ce fait, un tel procédé peut également être mis en œuvre pour une mesure de variation de pression interne d'un tuyau agencé dans des environnements radiatifs, c'est-à-dire lorsque le tuyau est soumis à des rayonnements ionisants, et plus généralement, dans des environnements où tout effet perturbateur sur la mesure de la déformation mécanique du tuyau a un effet identique sur la mesure de chacun des capteurs.

Conformément à l'invention, le procédé de mesure comporte les caractéristiques suivantes

- l'étape de mesure est précédée d'une fixation, à chaque zone de mesure, du capteur correspondant, les capteurs étant fixés à leurs zones de mesure respectives suivant la même méthode de fixation et étant choisis de sorte qu'une même variation d'une déformation mécanique qui leur est appliquée se traduise par une même variation relative de leurs grandeurs de suivi mesurées respectives,

- le procédé effectue la mesure d'une variation de pression interne du tuyau, et la portion du tuyau présente une forme de cylindre de révolution, chaque zone de mesure appartenant à une section de la portion du tuyau, le tuyau étant fermé à ses extrémités,

la variation de la pression interne étant calculée selon :

$$\Delta P_{int}=\Delta P_{ext}+\frac{r_1^2 r_2^2}{r_{0,int}^2 r_{0,ext}^2}\left[\frac{E(\Delta\Psi_2-\Delta\Psi_1)\left(r_{0,ext}^2-r_{0,int}^2\right)}{\kappa_\varepsilon(1+v)\left[r_1^2\cos^2(\phi_2)-r_2^2\cos^2(\phi_1)\right]}+\frac{\cos^2(\phi_2)-\cos^2(\phi_1)}{\pi\left[r_1^2\cos^2(\phi_2)-r_2^2\cos^2(\phi_1)\right]}\delta F\right]$$

où $\Delta P_{int}$ est la variation de la pression interne ;
$\Delta\Psi_1$ et $\Delta\Psi_2$ sont respectivement une variation relative de la première grandeur de suivi et une variation relative de la deuxième grandeur de suivi ;
$r_{0,ext}$ est un rayon externe de la portion du tuyau ;
$r_{0,int}$ est un rayon interne de la portion du tuyau ;
$r_1$ est un rayon auquel est réalisée la mesure associée à la première direction de mesure ;
$r_2$ est un rayon auquel est réalisée la mesure associée à la deuxième direction de mesure ;
E est le module d'Young du matériau dans lequel la portion (12) du tuyau (4) est réalisée ;
v est le coefficient de Poisson du matériau dans lequel la portion du tuyau est réalisée ;
$\phi_1$ et $\phi_2$ sont respectivement le premier angle et le deuxième angle ;
$\Delta P_{ext}$ une variation d'une pression externe appliquée à la portion du tuyau ;
$\delta F$ est une variation d'un effort longitudinal additionnel appliqué à la portion du tuyau et distinct d'une variation d'un effort longitudinal exercé sur la portion du tuyau par la variation de pression interne et la variation de pression externe ; et
$\kappa_\varepsilon$ est une sensibilité mécanique des capteurs, égale à un coefficient de proportionnalité entre une variation relative de la grandeur de suivi et une variation de déformation mécanique qui leur est appliquée.

Suivant d'autres aspects avantageux de l'invention, le procédé de mesure comporte une ou plusieurs des caractéristiques suivantes, prise(s) isolément ou suivant toutes les combinaisons techniquement possibles :

- le capteur correspondant est un segment de fibre optique dans lequel est inscrit un réseau de Bragg, le segment de fibre optique étant fixé à la zone de mesure de sorte que le réseau de Bragg correspondant s'étende le long de la direction de mesure associée à ladite zone de mesure,

la sensibilité mécanique $\kappa_\varepsilon$ s'exprimant comme :

$$\kappa_\varepsilon=\frac{1}{n_{eff}}\frac{\partial n_{eff}}{\partial\varepsilon_{mec}}+1$$

où $n_{eff}$ est un indice effectif du guide optique de la fibre optique ; et
$\varepsilon_{mec}$ est une déformation mécanique longitudinale de la fibre optique,
la grandeur de suivi étant une longueur d'onde de réflexion de chaque réseau de Bragg ;

- pour au moins deux zones de mesure, les segments de fibre optique correspondants appartiennent à une même fibre optique ;
- les axes de mesure associés à au moins deux segments de fibre optique d'une même fibre optique forment, avec l'axe longitudinal de la portion du tuyau, des angles distincts, en valeurs absolues, modulo $\pi$ ;
- les zones de mesure sur lesquelles sont fixés au moins deux segments de fibre optique d'une même fibre optique sont disposées le long d'une génératrice de la portion du tuyau ;
- pour au moins une zone de mesure, le capteur est sélectionné dans le groupe comprenant les capteurs de distance tels qu'un capteur mettant en œuvre une méthode acoustique entre un émetteur acoustique et un récepteur acoustique, les capteurs mettant en œuvre une méthode de réflectométrie sur câble électrique, les capteurs mettant en œuvre une méthode de réflectométrie optique, les jauges de déformation, telles que les jauges de déformation électrique, et les capteurs de déformation par stéréo-corrélation ;

- le premier angle vaut 0 modulo $\pi$, et le deuxième angle vaut $\pi/2$ modulo $\pi$ ;

le procédé permet la mesure d'une variation de température du tuyau et la portion du tuyau présente une forme de cylindre de révolution, chaque zone de mesure appartenant à une section de la portion du tuyau, le tuyau étant fermé à ses extrémités,

la variation de la température du tuyau étant calculée selon :

$$\Delta T = \frac{r_1^2 r_2^2 (\Delta\Psi_1 - \Delta\Psi_2)(\kappa_\epsilon(1-2v) - \kappa_P E)}{\kappa_T \kappa_\epsilon (1+v) r_{0,ext}^2 \left[ r_1^2 \cos^2(\phi_2) - r_2^2 \cos^2(\phi_1) \right]} + \frac{\Delta\Psi_1 r_1^2 \cos^2(\phi_2) - \Delta\Psi_2 r_2^2 \cos^2(\phi_1)}{\kappa_T \left[ r_1^2 \cos^2(\phi_2) - r_2^2 \cos^2(\phi_1) \right]} + \frac{1}{\kappa_T}\left( \frac{1-2v}{E}\kappa_\epsilon - \kappa_P \right) \Delta P_{ext}$$

$$+ \frac{\kappa_\epsilon \left[ (r_2^2 - r_1^2)\left( \cos^2(\phi_1) + \cos^2(\phi_2) - 2(1+v)\cos^2(\phi_1)\cos^2(\phi_2) \right) + (r_1^2 + r_2^2)\left( \cos^2(\phi_1) - \cos^2(\phi_2) \right) \right]}{2\kappa_T \pi E \left( r_{0,ext}^2 - r_{0,int}^2 \right)\left[ r_1^2 \cos^2(\phi_2) - r_2^2 \cos^2(\phi_1) \right]} \delta F$$

$$- \frac{1}{\kappa_T}\left( \frac{1-2v}{E}\kappa_\epsilon - \kappa_P \right) \frac{r_1^2 r_2^2 \left[ \cos^2(\phi_2) - \cos^2(\phi_1) \right]}{\pi r_{0,ext}^2 \left( r_{0,ext}^2 - r_{0,int}^2 \right)\left[ r_1^2 \cos^2(\phi_2) - r_2^2 \cos^2(\phi_1) \right]} \delta F$$

$$+ \epsilon_{surf}\frac{1}{\kappa_T}\left( \frac{\kappa_P}{\pi\left( r_{0,ext}^2 - r_{0,int}^2 \right)}\delta F - \frac{(\Delta\Psi_1 - \Delta\Psi_2)\kappa_P E}{\kappa_\epsilon(1+v)\left[ \cos^2(\phi_2) - \cos^2(\phi_1) \right]} \right)$$

où $\Delta T$ est la variation de la température du tuyau;

$\Delta\Psi_1$ et $\Delta\Psi_2$ sont respectivement une variation relative de la première grandeur de suivi et une variation relative de la deuxième grandeur de suivi ;

$r_{0,ext}$ est un rayon externe de la portion du tuyau ;

$r_{0,int}$ est un rayon interne de la portion du tuyau ;

$r_1$ est un rayon auquel est réalisée la mesure associée à la première direction de mesure ;

$r_2$ est un rayon auquel est réalisée la mesure associée à la deuxième direction de mesure ;

$\epsilon_{surf}$ un paramètre qui prend la valeur 1 lorsque $r_1$ et $r_2$ sont tous les deux égaux à $r_{0,int}$ ou tous deux égaux à $r_{0,ext}$ et la valeur 0 dans les autres cas ;

E est le module d'Young du matériau dans lequel la portion du tuyau est réalisée ;

v est le coefficient de Poisson du matériau dans lequel la portion du tuyau est réalisée ;

$\phi_1$ et $\phi_2$ sont respectivement le premier angle et le deuxième angle ;

$\Delta P_{ext}$ est une variation d'une pression externe appliquée à la portion du tuyau ;

$\delta F$ est une variation d'un effort longitudinal additionnel appliqué à la portion du tuyau et distinct d'une variation d'un effort longitudinal exercé sur la portion du tuyau par la variation de la pression interne et la variation de la pression externe ;

$\kappa_\epsilon$ est une sensibilité mécanique des capteurs, égale à un coefficient de proportionnalité entre une variation relative de la grandeur de suivi et une variation de déformation mécanique ;

$\kappa_T$ est une sensibilité thermique des capteurs, égale à un coefficient de proportionnalité entre une variation relative de la grandeur de suivi et une variation de leur température ; et

$\kappa_P$ est une sensibilité intrinsèque à la pression hydrostatique du capteur seul, ladite sensibilité étant égale à un coefficient de proportionnalité entre une variation relative de la grandeur de suivi et une variation de la pression hydrostatique qui lui est directement appliquée ;

N zones de mesure sont circonférentiellement réparties tous les $2\pi/N$ autour de l'axe longitudinal, N étant un entier strictement supérieur à 1 et, de préférence, N étant un nombre pair supérieur à 2, pour au moins deux zones de mesure distinctes, les grandeurs de suivi correspondantes sont associées à des directions de mesure définissant, avec un plan normal à l'axe longitudinal, des angles de signe opposé modulo $\pi$ ;

la mesure associée à la première direction de mesure et la mesure associée à la deuxième direction de mesure sont réalisées au niveau d'une même surface de la portion sélectionnée parmi une surface interne et une surface externe de ladite portion de tuyau ;

le procédé comprenant, en outre, les étapes :

- mesure, au moyen d'un capteur de pression agencé dans le tuyau, d'une pression d'un fluide présent dans le tuyau, formant une pression de référence ; et
- calcul d'un paramètre d'endommagement à partir d'un écart entre la variation de la pression interne calculée et une variation concomitante de la pression de référence mesurée,

le procédé de mesure comprenant, avantageusement, la génération d'un signal d'alerte si le paramètre d'endommagement déterminé est en dehors d'une plage de tolérance prédéterminée.

En outre, l'invention a pour objet un dispositif tel que défini dans la revendication 12. Ce dispositif de mesure d'une variation d'une pression interne d'un tuyau comporte, entre autres, une portion s'étendant le long d'un axe longitudinal, le dispositif de mesure comprenant au moins deux capteurs et un calculateur,

chaque capteur étant configuré de façon à délivrer, pour une zone de mesure correspondante de la portion du tuyau, un signal de mesure indicatif d'une grandeur de suivi prédéterminée associée à une direction de mesure respective, une variation relative de la grandeur de suivi étant représentative d'une variation d'une déformation locale, suivant la direction de mesure associée, de la zone de mesure,
les capteurs étant choisis de sorte qu'une même variation de température se traduise par une même variation relative de leurs grandeurs de suivi mesurées respectives,
le calculateur étant configuré pour mesurer, à partir de chaque signal de mesure, la grandeur de suivi correspondante,
le calculateur étant, en outre, configuré pour calculer la variation de la pression interne du tuyau à partir d'au moins une variation de déformation, chaque variation de déformation étant uniquement obtenue à partir de grandeurs de suivi mesurées, parmi lesquelles au moins une première grandeur de suivi mesurée est associée à une première direction de mesure et au moins une deuxième grandeur de suivi mesurée est associée à une deuxième direction de mesure, la première direction de mesure définissant un premier angle avec un plan normal à l'axe longitudinal, la deuxième direction de mesure définissant un deuxième angle avec un plan normal à l'axe longitudinal, le premier angle et le deuxième angle présentant des valeurs absolues différentes modulo $\pi$.
L'invention a également pour objet un ensemble comprenant un tuyau et un dispositif de mesure selon l'invention, le tuyau comportant une portion s'étendant le long d'un axe longitudinal,
chaque capteur du dispositif de mesure étant associé à une zone de mesure respective d'une surface externe de la portion du tuyau, et étant agencé de façon à fournir une grandeur de suivi associée à une direction de mesure respective, une variation relative de la grandeur de suivi étant représentative d'une variation d'une déformation locale correspondante du tuyau suivant la direction de mesure associée
au moins une première direction de mesure définissant un premier angle avec un plan normal à l'axe longitudinal, et au moins une deuxième direction de mesure définissant un deuxième angle avec le plan normal à l'axe longitudinal, le premier angle et le deuxième angle présentant des valeurs absolues différentes modulo $\pi$.

## BRÈVE DESCRIPTION DES DESSINS

L'invention sera mieux comprise à l'aide de la description qui va suivre, donnée uniquement à titre d'exemple non limitatif et faite en se référant aux dessins annexés sur lesquels :

- la figure 1 est une représentation schématique d'une installation comprenant un tuyau et un dispositif de mesure selon l'invention, des capteurs du dispositif de mesure étant agencés en hélice autour du tuyau ;
- la figure 2 est similaire à la figure 1, les capteurs du dispositif de mesure étant agencés en anneau autour du tuyau ; et
- la figure 3 est similaire à la figure 1, les capteurs du dispositif de mesure étant agencés le long d'une génératrice du tuyau.

## DESCRIPTION DÉTAILLÉE

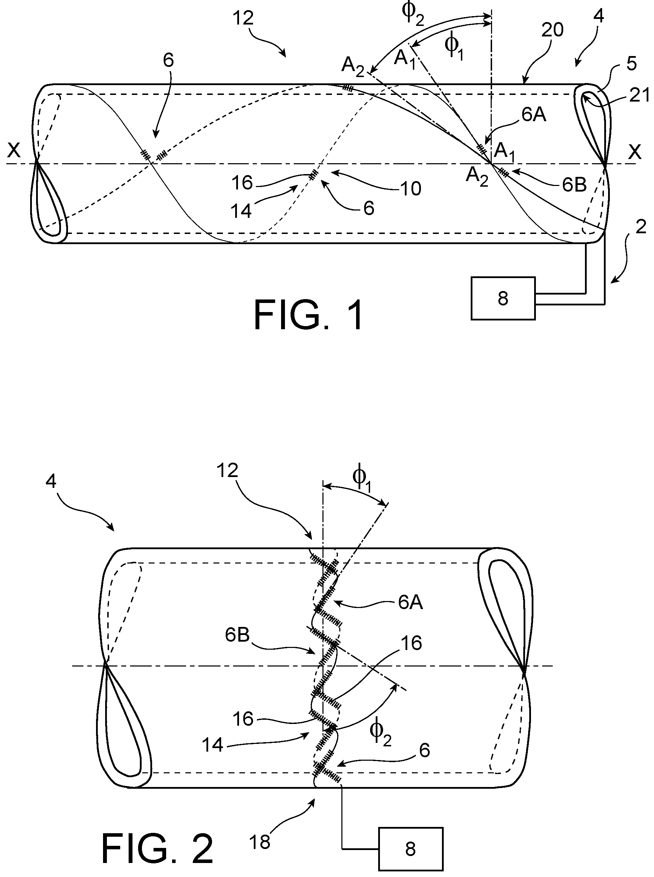

Un dispositif de mesure 2 selon l'invention est illustré par la figure 1. Le dispositif de mesure 2 est destiné à la mesure d'une variation $\Delta P_{int}$ d'une pression interne $P_{int}$ d'un tuyau 4, c'est-à-dire à la mesure de la variation de la pression d'un fluide présent dans ledit tuyau 4 et/ou d'une variation $\Delta T$ d'une température de ce même tuyau 4. La pression du fluide présent dans ledit tuyau 4 est également appelée « pression hydrostatique ». Un tel dispositif de mesure 2 équipe une installation 1 comprenant, outre le dispositif de mesure 2, le tuyau 4.

La présente divulgation se focalise sur la mesure de variation de pression interne, la possibilité de mesure de la variation de température du tuyau 4 étant décrite dans un deuxième temps, en complément de la mesure de pression interne. Bien entendu, si dans la présente divulgation la mesure de variation de température est décrite en complément de la mesure de variation de pression interne, il est parfaitement envisageable, sans que l'on sorte du cadre de l'invention, d'exploiter cette mesure de variation de température seule et indépendamment de la mesure de variation de pression interne.

Un tel tuyau 4 comporte une paroi 5 de section transversale à contour fermé, définissant une surface externe 20 et une surface interne 21 du tuyau 4, dont une portion 12 s'étend le long d'un axe longitudinal X-X.

Comme illustré par la figure 1, le dispositif de mesure 2 comprend au moins deux capteurs 6 et un calculateur 8.

Chaque capteur 6 est associé à une zone de mesure 10 de la portion 12 du tuyau 4, et est destiné à délivrer un signal de mesure correspondant à ladite zone de mesure 10. Une telle zone de mesure 10 est une partie de la surface externe 20 du tuyau 4, de sa surface interne 21, ou est située dans l'épaisseur sa paroi 5. En outre, le calculateur 8 est configuré pour déterminer la variation $\Delta P_{int}$ de la pression interne du tuyau 4 à partir des signaux de mesure reçus en provenance des capteurs 6.

Pour chaque zone de mesure 10, le capteur 6 correspondant est associé à une direction de mesure respective, portant, par exemple, la référence $A_1$-$A_1$ ou $A_2$-$A_2$ sur la figure 1. Pour capteur 6, le signal de mesure correspondant est indicatif d'une grandeur de suivi prédéterminée. En outre, pour chaque capteur 6, la grandeur de suivi correspondante est telle qu'une variation relative de ladite grandeur de suivi est représentative d'une variation d'une déformation locale, suivant la direction de mesure associée, de la zone de mesure 10 associée audit capteur 6.

Parmi les capteurs 6 du dispositif de mesure 2, au moins un premier capteur 6A est associé à une première direction de mesure $A_1$-$A_1$ définissant un premier angle $\phi_1$ avec un plan normal à l'axe longitudinal X-X, et au moins un deuxième capteur 6B est associé à une deuxième direction de mesure $A_2$-$A_2$ définissant un deuxième angle $\phi_2$ avec un plan normal à l'axe longitudinal X-X.

En d'autres termes, le premier capteur 6A est associé à une première grandeur de suivi dont la variation relative est représentative de la variation de déformation locale de la zone de mesure 10 correspondante suivant la première direction de mesure $A_1$-$A_1$ qui définit le premier angle $\phi_1$ avec un plan normal à l'axe longitudinal X-X. En outre, le deuxième capteur 6B est associé à la deuxième direction de mesure $A_2$-$A_2$ dont la variation relative est représentative de la variation de déformation locale de la zone de mesure 10 correspondante suivant la deuxième direction de mesure $A_2$-$A_2$ qui définit le deuxième angle $\phi_2$ avec un plan normal à l'axe longitudinal X-X.

Le premier angle $\phi_1$ et le deuxième angle $\phi_2$ présentent, en valeur absolue, des valeurs différentes modulo $\pi$.

Avantageusement, le premier angle $\phi_1$ vaut 0 modulo $\pi$, et le deuxième angle $\phi_2$ vaut $\pi/2$ modulo $\pi$. Ces valeurs sont celles conduisant à la plus grande sensibilité de mesure dans le cadre de l'invention.

En outre, les capteurs 6 sont choisis de sorte qu'une même variation de température se traduise par une même variation relative de leurs grandeurs de suivi respectives.

De cette façon, puisque la variation de la composante thermique de déformation se répercute de la même façon sur les grandeurs de suivi mesurées, la suppression des effets des variations thermiques sur les variations des déformations mesurées du tuyau est rendue possible, par une simple compensation entre les capteurs 6.

De préférence, chaque capteur 6 est destiné à réaliser une telle mesure en étant fixé à la zone de mesure 10 correspondante.

Dans ce cas, les capteurs 6 sont avantageusement fixés à leurs zones de mesure 10 respectives suivant la même méthode de fixation. En outre, les capteurs 6 sont choisis de sorte qu'une même variation d'une déformation mécanique se traduise par une même variation relative de leurs grandeurs de suivi respectives.

De cette façon, les capteurs 6 présentent des comportements similaires vis-à-vis des variations de déformations ; des disparités entre les variations des grandeurs de suivi mesurées, qui conduiraient à une mauvaise estimation de la variation de la pression interne $\Delta P_{int}$, sont ainsi évitées.

Une telle fixation est, par exemple, réalisée par collage des capteurs 6 à leurs zones de mesure respectives.

De préférence, chaque capteur 6 est un segment de fibre optique 14 dans lequel est inscrit un réseau de Bragg 16. Dans ce cas, chaque segment de fibre optique 14 est fixé à la zone de mesure 10 correspondante, de sorte que son réseau de Bragg 16 s'étende le long de la direction de mesure associée audit capteur 6, c'est-à-dire à ladite zone de mesure 10. En outre, pour chaque segment de fibre 14, la grandeur de suivi associée est la longueur d'onde de réflexion du réseau de Bragg 16 correspondant.

En outre, pour satisfaire aux conditions sur la variation relative de la grandeur de suivi avec la température et la déformation mécanique, les segments de fibre optique 14 proviennent, avantageusement, d'une même préforme. De préférence encore, les segments 14 appartiennent à une même fibre optique 18, et sont répartis sur cette fibre optique 18.

Avantageusement, les axes de mesure associés à au moins deux segments de fibre optique 14 d'une même fibre optique 18 forment, avec un plan normal à l'axe longitudinal X-X de la portion 12 du tuyau 4, des angles, en valeur absolue, distincts modulo $\pi$. De cette façon, une mesure de variation de pression interne du tuyau 4 est susceptible d'être obtenue au moyen d'une unique fibre optique 18.

Par exemple, comme cela apparaît sur la figure 2, la fibre optique 18 est enroulée en anneau autour de l'axe longitudinal de la portion 12. Dans ce cas, ainsi que dans celui où les zones de mesure 10 sont disposées en hélice autour de l'axe longitudinal, il est avantageux que N zones de mesure 10 (N étant un entier strictement supérieur à 1) soient circonférentiellement réparties tous les $2\pi/N$ autour de l'axe longitudinal X-X, la mesure de variation de pression étant le résultat de la moyenne arithmétique des mesures de variation de pression réalisées pour chacune de ces zones. De cette façon, les effets de la flexion de la portion 12 du tuyau 4 sont susceptibles d'être compensés.

De préférence encore, N étant un nombre pair supérieur à 2, les grandeurs de suivi correspondant auxdites zones de mesure sont respectivement associées à des directions de mesure définissant, avec un plan normal à l'axe longitudinal, des angles de signe opposé modulo $\pi$. De cette façon, outre une compensation des effets de la flexion du tuyau 4 sur la mesure, les effets de sa torsion sont également susceptibles d'être compensés.

De manière particulièrement avantageuse, pour permettre une bonne compensation de la torsion, N peut être un entier pair, chaque zone de mesure peut avoir une zone de mesure homologue paire dont les directions de mesure sont de signes opposés, la mesure de variation de pression peut alors être le résultat de la moyenne arithmétique des mesures de variation de pression réalisées pour chacune de ces zones, et ainsi être compensée vis-à-vis des effets de torsion.

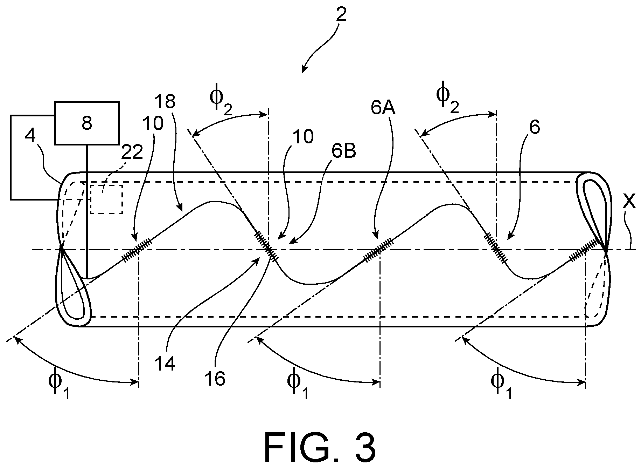

Selon une variante illustrée par la figure 3, les zones de mesure 10, sur lesquelles sont fixés au moins deux segments de fibre optique 14 d'une même fibre optique 18, sont disposées le long d'une génératrice de la portion 12 du tuyau 4. Ceci est avantageux, dans la mesure où seule une partie du tuyau 4 est accessible, rendant peu aisé, voire impossible, un enroulement de la fibre optique 18 sur sa circonférence. Les segments de fibre optique 14 sont alors agencés au contact et mécaniquement solidaires de la partie accessible du tuyau 4.

Selon un autre exemple, pour au moins une zone de mesure 10, le capteur 6 correspondant est un capteur de distance, tel qu'un capteur mettant en œuvre une méthode de mesure de distance acoustique entre un émetteur acoustique et un récepteur acoustique. Dans ce cas, la grandeur de suivi est la distance mesurée par le capteur 6.

Alternativement, le capteur 6 est un capteur mettant en œuvre une méthode de réflectométrie sur câble électrique, un capteur mettant en œuvre une méthode de réflectométrie optique, une jauge électrique de déformation.

En variante, le capteur 6 est apte à réaliser la mesure de la grandeur de suivi sans être fixé à la zone de mesure 10 correspondante. C'est, par exemple, le cas d'un capteur de déformation par stéréo-corrélation.

Comme indiqué précédemment, le calculateur 8 est configuré pour déterminer la variation $\Delta P_{int}$ de la pression interne du tuyau 4 à partir des signaux de mesure reçus en provenance des capteurs 6.

Plus précisément, pour chaque capteur 6, le calculateur 8 est configuré pour mesurer, à partir du signal de mesure qu'il délivre, la grandeur de suivi correspondante.

En outre, le calculateur 8 est configuré pour calculer la variation $\Delta P_{int}$ de la pression interne du tuyau 4 à partir d'au moins une variation de déformation, chaque variation de déformation étant uniquement obtenue à partir de grandeurs de suivi mesurées obtenues directement depuis le tuyau 4 lui-même.

De préférence, outre les variations de déformation, le calculateur 8 est configuré pour mettre en œuvre une variation $\Delta P_{ext}$ d'une pression externe $P_{ext}$ et une variation d'un effort longitudinal additionnel $\delta F$ appliqué à la portion 12 du tuyau 4 pour le calcul de la variation $\Delta P_{int}$ de la pression interne du tuyau 4.

Les grandeurs de suivi mesurées mises en œuvre par le calculateur 8 comprennent au moins une première grandeur de suivi mesurée associée au capteur 6A (c'est-à-dire pour laquelle la première direction de mesure respective définit le premier angle $\phi_1$ avec le plan normal à l'axe longitudinal) et une deuxième grandeur de suivi mesurée associée au capteur 6B (c'est-à-dire pour laquelle la deuxième direction de mesure définit le deuxième angle $\phi_2$ avec le plan normal à l'axe longitudinal X-X).

Ici, la variation de l'effort longitudinal additionnel $\delta F$ est définie comme la variation d'un effort longitudinal s'exerçant sur la portion 12 du tuyau 4, et qui est distincte de la variation d'un effort longitudinal exercé sur ladite portion 12 par les seules variations des pressions interne $P_{int}$ et externe $P_{ext}$.

Dans le cas particulier où la portion 12 du tuyau 4 présente une forme de cylindre de révolution, chaque zone de mesure 10 appartenant à une surface externe 20 de la portion 12 du tuyau, le tuyau étant fermé à ses extrémités, le calculateur 8 est configuré pour calculer la variation de la pression interne $\Delta P_{int}$ selon :

$$\Delta P_{int}=\Delta P_{ext}+\frac{r_{0,ext}^2 E(\Delta\Psi_2-\Delta\Psi_1)}{\kappa_\varepsilon(1+v)\left[\cos^2(\phi_2)-\cos^2(\phi_1)\right]}\left(\frac{1}{r_{0,int}^2}-\frac{1}{r_{0,ext}^2}\right)+\frac{\delta F}{\pi r_{0,int}^2}$$

où $\Delta\Psi_1$ et $\Delta\Psi_2$ sont respectivement une variation relative de la première grandeur de suivi et une variation relative de la deuxième grandeur de suivi ;
$r_{0,ext}$ est un rayon externe de la portion 12 du tuyau 4 ;
$r_{0,int}$ est un rayon interne de la portion 12 du tuyau 4 ;
E et v sont respectivement le module d'Young et le coefficient de Poisson du matériau dans lequel la portion 12 du tuyau 4 est réalisée ;
$\kappa_\varepsilon$ est une sensibilité mécanique des capteurs, égale à un coefficient de proportionnalité entre une variation relative de la grandeur de suivi et une variation de déformation mécanique ; et
$\delta F$ est une variation d'un effort longitudinal additionnel appliqué à la portion du tuyau et distinct d'une variation d'un effort longitudinal exercé sur la portion du tuyau par la variation de la pression interne et la variation de la pression externe.

Dans le cas où les capteurs 6 sont positionnés dans l'épaisseur du tuyau à un même rayon r :

$$\Delta P_{int}=\Delta P_{ext}+\frac{r^2 E(\Delta\Psi_2-\Delta\Psi_1)}{\kappa_\varepsilon(1+\nu)\left[\cos^2(\phi_2)-\cos^2(\phi_1)\right]}\left(\frac{1}{r^2_{0,int}}-\frac{1}{r^2_{0,ext}}\right)+\frac{r^2}{\pi r^2_{0,int}r^2_{0,ext}}\delta F$$

où r est un rayon auquel sont positionnés les premier et deuxième capteurs 6, et qui est donc associé à la première et la deuxième zone de mesure 10, autrement dit à la première et deuxième mesure.

Et dans le cas le plus général où les premier et deuxième capteurs 6 sont positionnés dans l'épaisseur ou en surface du tuyau, respectivement à un rayon $r_1$ et un rayon $r_2$ :

$$\Delta P_{int}=\Delta P_{ext}+\frac{r_1^2 r_2^2}{r^2_{0,int}r^2_{0,ext}}\left[\frac{E(\Delta\Psi_2-\Delta\Psi_1)(r^2_{0,ext}-r^2_{0,int})}{\kappa_\varepsilon(1+\nu)\left[r_1^2\cos^2(\phi_2)-r_2^2\cos^2(\phi_1)\right]}+\frac{\cos^2(\phi_2)-\cos^2(\phi_1)}{\pi\left[r_1^2\cos^2(\phi_2)-r_2^2\cos^2(\phi_1)\right]}\delta F\right]$$

où $r_1$ est un rayon auquel est positionné le premier capteur 6, qui est donc associé à la première zone de mesure 10 et à la première mesure ;

$r_2$ est un rayon auquel est positionné le deuxième capteur 6, qui est donc associé à la deuxième zone de mesure 10 et à la deuxième mesure.

On notera, bien entendu, que les valeurs des rayons $r_{0,int}$, $r_{0,ext}$, r, $r_1$, et $r_2$ sont des valeurs de référence déterminées à instant de référence, comme un instant initial, puisque ces valeurs, compte tenu des efforts exercés sur le tuyau 4, sont amenées à évoluer.

En particulier, pour un capteur 6 formé par un segment de fibre optique 14 dans lequel est inscrit un réseau de Bragg 16, la sensibilité mécanique $\kappa_\varepsilon$ s'exprime comme :

$$\kappa_\varepsilon=\frac{1}{n_{eff}}\frac{\partial n_{eff}}{\partial\varepsilon_{mec}}+1$$

où $n_{eff}$ est un indice effectif du guide optique de la fibre optique 18 ; et
$\varepsilon_{mec}$ est une déformation mécanique longitudinale de la fibre optique.

Dans le cas avantageux où, à l'instant de référence prédéterminé, la pression interne $P_{int,0}$ du tuyau 4 est connue et enregistrée dans une mémoire du calculateur 8, ledit calculateur 8 est configuré pour calculer la pression interne $P_{int}$ à un instant final quelconque ultérieur à l'instant initial par intégration, dans le temps, de la variation de la pression interne $\Delta P_{int}$ entre l'instant de référence et l'instant final.

De préférence, le calculateur 8 est également configuré pour calculer une variation de la température du tuyau 4 à partir des grandeurs de suivi mesurées, parmi lesquelles au moins la première grandeur de suivi et la deuxième grandeur de suivi mesurées. Cette mesure indicatrice de variation de température de contact peut avantageusement être utilisée conjointement avec la mesure de variation de pression interne afin de prévenir la formation de bouchons d'hydrates au sein de pipelines utilisés pour le transport d'hydrocarbures.

On notera que, plus précisément et comme indiqué ci-après, la variation de température du tuyau 4 calculée, ou déterminée, est une température de contact entre le tuyau (ou plus précisément sa portion 12) et les capteurs 6 correspondant aux zones de mesure

Plus spécifiquement, dans le cas où la portion 12 du tuyau 4 présente une forme de cylindre de révolution, chaque zone de mesure 10 appartenant à une surface externe 20 de la portion 12 du tuyau, le tuyau 4 étant fermé à ses extrémités, le calculateur 8 est configuré pour calculer ladite variation de température selon :

$$\Delta T=\frac{1}{\kappa_T}\left(\frac{1-2\nu}{1+\nu}\frac{\Delta\Psi_1-\Delta\Psi_2}{\cos^2(\phi_2)-\cos^2(\phi_1)}+\frac{\Delta\Psi_1\cos^2(\phi_2)-\Delta\Psi_2\cos^2(\phi_1)}{\cos^2(\phi_2)-\cos^2(\phi_1)}+\left(\frac{1-2\nu}{E}\kappa_\varepsilon-\kappa_P\right)\Delta P_{ext}\right.$$
$$\left.-\frac{2\kappa_\varepsilon(1-\nu)}{\pi E\left(r^2_{0,ext}-r^2_{0,int}\right)}\delta F\right)$$

où $\Delta T$ est la variation de la température du tuyau 4 ; et

$\kappa_T$ est une sensibilité thermique des capteurs, égale à un coefficient de proportionnalité entre une variation relative de la grandeur de suivi et une variation de leur température.

Dans une telle configuration, la variation de température $\Delta T$ du tuyau déterminée est une température de contact de la surface externe du tuyau 4.

Dans le cas où les capteurs sont positionnés en surface interne du tuyau à un même rayon $r_{0,int}$ :

$$\Delta T = \frac{1}{\kappa_T} \left( \frac{(\Delta\Psi_1 - \Delta\Psi_2)\left(\kappa_P E\left(r_{0,ext}^2 - r_{0,int}^2\right) + \kappa_\varepsilon(1-2v)r_{0,int}^2\right)}{\kappa_\varepsilon(1+v)r_{0,ext}^2\left(\cos^2(\phi_2) - \cos^2(\phi_1)\right)} + \frac{\Delta\Psi_1\cos^2(\phi_2) - \Delta\Psi_2\cos^2(\phi_1)}{\cos^2(\phi_2) - \cos^2(\phi_1)} \right.$$

$$\left. + \left(\frac{1-2v}{E}\kappa_\varepsilon - \kappa_P\right)\Delta P_{ext} - \frac{1}{\pi E}\left(\frac{\kappa_P E - \kappa_\varepsilon(1-2v)}{r_{0,ext}^2} + \frac{2\kappa_\varepsilon(1-v)}{r_{0,ext}^2 - r_{0,int}^2}\right)\delta F \right)$$

Dans une telle configuration, la variation de température $\Delta T$ du tuyau 4 déterminée est une température de contact de la surface interne du tuyau 4.

Dans le cas où les capteurs sont positionnés dans l'épaisseur du tuyau à un même rayon $r$ :

$$\Delta T = \frac{1}{\kappa_T} \left( \frac{r^2(\Delta\Psi_1 - \Delta\Psi_2)\left(\kappa_\varepsilon(1-2v) - \kappa_P E\right)}{\kappa_\varepsilon(1+v)r_{0,ext}^2\left[\cos^2(\phi_2) - \cos^2(\phi_1)\right]} + \frac{\Delta\Psi_1\cos^2(\phi_2) - \Delta\Psi_2\cos^2(\phi_1)}{\cos^2(\phi_2) - \cos^2(\phi_1)} \right.$$

$$\left. + \left(\frac{1-2v}{E}\kappa_\varepsilon - \kappa_P\right)\Delta P_{ext} - \frac{\kappa_\varepsilon\left(r_{0,ext}^2 + (1-2v)r^2\right) - \kappa_P E r^2}{\pi E r_{0,ext}^2\left(r_{0,ext}^2 - r_{0,int}^2\right)}\delta F \right)$$

où $\Delta T$ est ici la variation de la température au rayon $r$ ; et
$K_P$ est une sensibilité intrinsèque à la pression hydrostatique du capteur seul, ladite sensibilité étant égale à un coefficient de proportionnalité entre une variation relative de la grandeur de suivi et une variation de la pression hydrostatique qui lui est directement appliquée.

Dans une telle configuration, la variation de température $\Delta T$ du tuyau 4 déterminée est une température de la paroi du tuyau 4 au rayon $r$.

Et dans le cas le plus général où les capteurs sont positionnés dans l'épaisseur de la portion 12 du tuyau 4, respectivement à un rayon $r_1$ et un rayon $r_2$ :

$$\Delta T = \frac{r_1^2 r_2^2(\Delta\Psi_1 - \Delta\Psi_2)\left(\kappa_\varepsilon(1-2v) - \kappa_P E\right)}{\kappa_T \kappa_\varepsilon(1+v)r_{0,ext}^2\left[r_1^2\cos^2(\phi_2) - r_2^2\cos^2(\phi_1)\right]} + \frac{\Delta\Psi_1 r_1^2\cos^2(\phi_2) - \Delta\Psi_2 r_2^2\cos^2(\phi_1)}{\kappa_T\left[r_1^2\cos^2(\phi_2) - r_2^2\cos^2(\phi_1)\right]} + \frac{1}{\kappa_T}\left(\frac{1-2v}{E}\kappa_\varepsilon - \kappa_P\right)\Delta P_{ext}$$

$$+ \frac{\kappa_\varepsilon\left[(r_2^2 - r_1^2)\left(\cos^2(\phi_1) + \cos^2(\phi_2) - 2(1+v)\cos^2(\phi_1)\cos^2(\phi_2)\right) + (r_1^2 + r_2^2)\left(\cos^2(\phi_1) - \cos^2(\phi_2)\right)\right]}{2\kappa_T\pi E\left(r_{0,ext}^2 - r_{0,int}^2\right)\left[r_1^2\cos^2(\phi_2) - r_2^2\cos^2(\phi_1)\right]}\delta F$$

$$- \frac{1}{\kappa_T}\left(\frac{1-2v}{E}\kappa_\varepsilon - \kappa_P\right)\frac{r_1^2 r_2^2\left[\cos^2(\phi_2) - \cos^2(\phi_1)\right]}{\pi r_{0,ext}^2\left(r_{0,ext}^2 - r_{0,int}^2\right)\left[r_1^2\cos^2(\phi_2) - r_2^2\cos^2(\phi_1)\right]}\delta F$$

où $r_1$ est un rayon de la portion 12 du tuyau 4 à un instant de référence prédéterminé associé à l'angle $\phi_1$;
$r_2$ est un rayon de la portion 12 du tuyau 4 à un instant de référence prédéterminé associé à l'angle $\phi_2$;
$K_p$ est une sensibilité intrinsèque à la pression hydrostatique du capteur seul, ladite sensibilité étant égale à un coefficient de proportionnalité entre une variation relative de la grandeur de suivi et une variation de la pression hydrostatique qui lui est directement appliquée.

Dans une telle configuration, la variation de température $\Delta T$ du tuyau 4 déterminée est une température de la paroi du tuyau 4, intermédiaire entre les rayons $r_1$ et $r_2$.

De même, et d'une manière identique que pour la détermination de la variation de pression, les valeurs des rayons $r_{0,int}$, $r_{0,ext}$, $r$, $r_1$, et $r_2$, indiquées ci-dessus, sont des valeurs de référence déterminées à instant de référence, comme un instant initial, puisque ces valeurs, compte tenu des efforts exercés sur le tuyau 4, sont amenées à évoluer.

De façon avantageuse, le calculateur 8 est également configuré pour mesurer, à partir d'un signal délivré par un capteur de pression 22 (inclus ou non dans le dispositif de mesure 2) agencé dans le tuyau 4, une pression (dite « pression de référence ») d'un fluide présent dans le tuyau 4.

Dans ce cas, le calculateur 8 est également configuré pour déterminer un paramètre d'endommagement à partir d'un écart entre la variation de la pression interne $\Delta P_{int}$ calculée et une variation concomitante de la pression de référence mesurée.

Par exemple, le facteur d'endommagement est égal au ratio entre, d'une part, l'écart entre la variation de la pression de référence et la variation de la pression interne $\Delta P_{int}$ calculée, et d'autre part, la variation de la pression de référence.

De préférence, le calculateur 8 est également configuré pour générer un signal d'alerte si le paramètre d'endommagement déterminé se trouve en dehors d'une plage de tolérance prédéterminée.

Le fonctionnement du dispositif de mesure 2 va maintenant être décrit.

D'abord, les capteurs 6 sont agencés de sorte que chaque capteur 6 délivre un signal de mesure indicatif de la variable de suivi associée à une zone de mesure 10 et à une direction de mesure respectives.

Parmi l'ensemble des capteurs 6, au moins un premier capteur 6A est tel que la direction de mesure correspondante définit un premier angle avec un plan normal à l'axe longitudinal, et un deuxième capteur 6B est tel que la direction de mesure correspondante définit un deuxième angle avec un plan normal à l'axe longitudinal X-X. Le premier angle et le deuxième angle présentent des valeurs absolues différentes modulo $\pi$.

Le calculateur 8 reçoit, en provenance de chaque capteur 6, et en particulier des premiers capteurs 6A et des deuxièmes capteurs 6B, le signal de mesure correspondant, et mesure, à partir de chaque signal de mesure, la grandeur de suivi correspondante.

Plus précisément, pour chaque capteur 6, le calculateur 8 calcule une variation relative de la grandeur de suivi correspondante.

En outre, le calculateur 8 reçoit une information représentative d'une valeur de la variation de la pression externe $\Delta P_{ext}$, et de la variation de l'effort longitudinal additionnel $\delta F$ appliqué au tuyau 4, distinct d'une variation d'un effort longitudinal par la variation de la pression interne et la variation de la pression externe.

Le calculateur calcule également la variation de la pression interne du tuyau 4, à partir de la variation de la pression externe, de la variation de l'effort longitudinal additionnel et des grandeurs de suivi mesurées, parmi lesquelles au moins la première grandeur de suivi mesurée associée au premier capteur 6A et la deuxième grandeur de suivi mesurée associée au deuxième capteur 6B.

De préférence, le calculateur 8 calcule également la variation de la température de contact de la portion 12 du tuyau 4 à partir des grandeurs de suivi mesurées.

En outre, le calculateur 8 détermine le paramètre d'endommagement à partir de la variation de la pression interne $\Delta P_{int}$ calculée, et génère un signal d'alerte si le paramètre d'endommagement déterminé se trouve en dehors de la plage de tolérance prédéterminée.

## Revendications

1. Procédé de mesure d'une variation d'une pression interne d'un tuyau (4) comportant une portion (12) s'étendant le long d'un axe longitudinal, le procédé de mesure comprenant les étapes :

   - pour chacune parmi au moins deux zones de mesure (10) de la portion (12) du tuyau (4), mesure, au moyen d'un capteur (6, 6A, 6B) correspondant, d'une grandeur de suivi associée à une direction de mesure respective, une variation relative de la grandeur de suivi étant représentative d'une variation d'une déformation locale correspondante du tuyau (4) suivant la direction de mesure associée ; et
   - calcul de la variation de la pression interne du tuyau (4) à partir d'au moins une variation de déformation, chaque variation de déformation étant uniquement obtenue à partir de grandeurs de suivi mesurées, parmi lesquelles au moins une première grandeur de suivi mesurée est associée à une première direction de mesure et au moins une deuxième grandeur de suivi mesurée est associée à une deuxième direction de mesure,

     la première direction de mesure définissant un premier angle ($\Phi 1$) avec un plan normal à l'axe longitudinal, la deuxième direction de mesure définissant un deuxième angle avec un plan normal à l'axe longitudinal, le premier angle et le deuxième angle présentant des valeurs absolues différentes modulo $\pi$,

les capteurs (6, 6A, 6B) étant choisis de sorte qu'une même variation de leur température se traduise par une même variation relative de leurs grandeurs de suivi mesurées respectives, dans lequel l'étape de mesure est précédée d'une fixation, à chaque zone de mesure (10), du capteur (6, 6A, 6B) correspondant,

les capteurs (6, 6A, 6B) étant fixés à leurs zones de mesure (10) respectives suivant la même méthode de fixation, et étant choisis de sorte qu'une même variation d'une déformation mécanique qui leur est appliquée se traduise par une même variation relative de leurs grandeurs de suivi mesurées respectives, dans lequel le procédé effectue la mesure d'une variation de pression interne du tuyau (4) et la portion (12) du tuyau (4) présente une forme de cylindre de révolution, chaque zone de mesure (10) appartenant à une section de la portion (12) du tuyau (4), le tuyau (4) étant fermé à ses extrémités,

la variation de la pression interne étant calculée selon :

$$\Delta P_{int} = \Delta P_{ext} + \frac{r_1^2 r_2^2}{r_{0,int}^2 r_{0,ext}^2} \left[ \frac{E(\Delta\Psi_2 - \Delta\Psi_1)(r_{0,ext}^2 - r_{0,int}^2)}{\kappa_\varepsilon(1+\nu)\left[r_1^2\cos^2(\phi_2) - r_2^2\cos^2(\phi_1)\right]} + \frac{\cos^2(\phi_2) - \cos^2(\phi_1)}{\pi\left[r_1^2\cos^2(\phi_2) - r_2^2\cos^2(\phi_1)\right]}\delta F \right]$$

où $\Delta P_{int}$ est la variation de la pression interne ;

$\Delta\Psi_1$ et $\Delta\Psi_2$ sont respectivement une variation relative de la première grandeur de suivi et une variation relative de la deuxième grandeur de suivi ;

$r_{0,ext}$ est un rayon externe de la portion (12) du tuyau (4) ;

$r_{0,int}$ est un rayon interne de la portion (12) du tuyau (4) ;

$r_1$ est un rayon auquel est réalisée la mesure associée à la première direction de mesure ;

$r_2$ est un rayon auquel est réalisée la mesure associée à la deuxième direction de mesure ;

E est le module d'Young du matériau dans lequel la portion (12) du tuyau (4) est réalisée ;

$\nu$ est le coefficient de Poisson du matériau dans lequel la portion du tuyau est réalisée ;

$\phi_1$ et $\phi_2$ sont respectivement le premier angle et le deuxième angle ;

$\Delta P_{ext}$ une variation d'une pression externe appliquée à la portion (12) du tuyau (4) ;

$\delta F$ est une variation d'un effort longitudinal additionnel appliqué à la portion du tuyau, et distinct d'une variation d'un effort longitudinal exercé sur la portion (12) du tuyau (4) par la variation de pression interne et la variation de pression externe ; et

$\kappa_\varepsilon$ est une sensibilité mécanique des capteurs, égale à un coefficient de proportionnalité entre une variation relative de la grandeur de suivi et une variation de déformation mécanique qui leur est appliquée.

2. Procédé de mesure selon la revendication 1, dans lequel, pour au moins une zone de mesure (10), le capteur (6, 6A, 6B) correspondant est un segment de fibre optique (14) dans lequel est inscrit un réseau de Bragg (16), le segment de fibre optique (14) étant fixé à la zone de mesure (10) de sorte que le réseau de Bragg (16) correspondant s'étende le long de la direction de mesure associée à ladite zone de mesure (10),

   la sensibilité mécanique $\kappa_\varepsilon$ s'exprimant comme :

$$\kappa_\varepsilon = \frac{1}{n_{eff}} \frac{\partial n_{eff}}{\partial \varepsilon_{mec}} + 1$$

   où $n_{eff}$ est un indice effectif du guide optique de la fibre optique (18); et
   $\varepsilon_{mec}$ est une déformation mécanique longitudinale de la fibre optique (18),
   la grandeur de suivi étant une longueur d'onde de réflexion de chaque réseau de Bragg (16).

3. Procédé de mesure selon la revendication 2, dans lequel, pour au moins deux zones de mesure (12), les segments de fibre optique (14) correspondants appartiennent à une même fibre optique (18).

4. Procédé de mesure selon la revendication 3, dans lequel les axes de mesure associés à au moins deux segments de fibre optique (14) d'une même fibre optique (18) forment, avec l'axe longitudinal de la portion (12) du tuyau (4), des angles distincts, en valeurs absolues, modulo $\pi$.

5. Procédé de mesure selon la revendication 3 ou 4, dans lequel les zones de mesure (10), sur lesquelles sont fixés au moins deux segments de fibre optique (14) d'une même fibre optique (18), sont disposées le long d'une génératrice de la portion (12) du tuyau (4).

6. Procédé de mesure selon l'une quelconque des revendications 1 à 5, dans lequel, pour au moins une zone de mesure (10), le capteur (6, 6A, 6B) est sélectionné dans le groupe comprenant les capteurs de distance tels qu'un capteur mettant en œuvre une méthode acoustique entre un émetteur acoustique et un récepteur acoustique, les capteurs mettant en œuvre une méthode de réflectométrie sur câble électrique, les capteurs mettant en œuvre une méthode de réflectométrie optique, les jauges de déformation, telles que les jauges de déformation électrique, et les capteurs de déformation par stéréo-corrélation.

7. Procédé de mesure selon l'une quelconque des revendications 1 à 6, dans lequel le premier angle ($\Phi$1) vaut 0 modulo $\pi$, et le deuxième angle ($\Phi$2) vaut $\pi/2$ modulo $\pi$.

8. Procédé de mesure selon la revendication 7, dans lequel le procédé permet la mesure d'une variation de température du tuyau (4) et la portion (12) du tuyau (4) présente une forme de cylindre de révolution, chaque zone de mesure (10) appartenant à une section de la portion (12) du tuyau (4), le tuyau (4) étant fermé à ses extrémités,

la variation de la température du tuyau étant calculée selon :

$$\Delta T = \frac{r_1^2 r_2^2 (\Delta\Psi_1 - \Delta\Psi_2)(\kappa_\varepsilon(1-2v) - \kappa_P E)}{\kappa_T \kappa_\varepsilon (1+v) r_{0,ext}^2 \left[r_1^2 \cos^2(\phi_2) - r_2^2 \cos^2(\phi_1)\right]} + \frac{\Delta\Psi_1 r_1^2 \cos^2(\phi_2) - \Delta\Psi_2 r_2^2 \cos^2(\phi_1)}{\kappa_T \left[r_1^2 \cos^2(\phi_2) - r_2^2 \cos^2(\phi_1)\right]} + \frac{1}{\kappa_T}\left(\frac{1-2v}{E}\kappa_\varepsilon - \kappa_P\right)\Delta P_{ext}$$

$$+ \frac{\kappa_\varepsilon \left[(r_2^2 - r_1^2)\left(\cos^2(\phi_1) + \cos^2(\phi_2) - 2(1+v)\cos^2(\phi_1)\cos^2(\phi_2)\right) + (r_1^2 + r_2^2)\left(\cos^2(\phi_1) - \cos^2(\phi_2)\right)\right]}{2\kappa_T \pi E\left(r_{0,ext}^2 - r_{0,int}^2\right)\left[r_1^2 \cos^2(\phi_2) - r_2^2 \cos^2(\phi_1)\right]}\delta F$$

$$- \frac{1}{\kappa_T}\left(\frac{1-2v}{E}\kappa_\varepsilon - \kappa_P\right)\frac{r_1^2 r_2^2 \left[\cos^2(\phi_2) - \cos^2(\phi_1)\right]}{\pi r_{0,ext}^2 \left(r_{0,ext}^2 - r_{0,int}^2\right)\left[r_1^2 \cos^2(\phi_2) - r_2^2 \cos^2(\phi_1)\right]}\delta F$$

$$+ \epsilon_{surf}\frac{1}{\kappa_T}\left(\frac{\kappa_P}{\pi\left(r_{0,ext}^2 - r_{0,int}^2\right)}\delta F - \frac{(\Delta\Psi_1 - \Delta\Psi_2)\kappa_P E}{\kappa_\varepsilon(1+v)\left[\cos^2(\phi_2) - \cos^2(\phi_1)\right]}\right)$$

où $\Delta T$ est la variation de la température du tuyau (4) ;
$\Delta\Psi_1$ et $\Delta\Psi_2$ sont respectivement une variation relative de la première grandeur de suivi et une variation relative de la deuxième grandeur de suivi ;
$r_{0,ext}$ est un rayon externe de la portion (12) du tuyau (4) ;
$r_{0,int}$ est un rayon interne de la portion (12) du tuyau (4) ;
$r_1$ est un rayon auquel est réalisée la mesure associée à la première direction de mesure ;
$r_2$ est un rayon auquel est réalisée la mesure associée à la deuxième direction de mesure ;
$\varepsilon_{surf}$ un paramètre qui prend la valeur 1 lorsque $r_1$ et $r_2$ sont tous deux égaux à $r_{0,int}$ ou tout deux égaux à $r_{0,ext}$ et la valeur 0 dans les autres cas ;
E est le module d'Young du matériau dans lequel la portion (12) du tuyau (4) est réalisée ;
v est le coefficient de Poisson du matériau dans lequel la portion (12) du tuyau (4) est réalisée ;
$\phi_1$ et $\phi_2$ sont respectivement le premier angle et le deuxième angle ;
$\Delta P_{ext}$ est une variation d'une pression externe appliquée à la portion (12) du tuyau (4) ;
$\delta F$ est une variation d'un effort longitudinal additionnel appliqué à la portion (12) du tuyau (4) et distinct d'une variation d'un effort longitudinal exercé sur la portion (12) du tuyau (4) par la variation de la pression interne et la variation de la pression externe ;
$\kappa_\varepsilon$ est une sensibilité mécanique des capteurs (6, 6A, 6B), égale à un coefficient de proportionnalité entre une variation relative de la grandeur de suivi et une variation de déformation mécanique ;
$\kappa_T$ est une sensibilité thermique des capteurs (6, 6A, 6B), égale à un coefficient de proportionnalité entre une variation relative de la grandeur de suivi et une variation de leur température ; et
$K_P$ est une sensibilité intrinsèque à la pression hydrostatique du capteur (6, 6A, 6B) seul, ladite sensibilité étant égale à un coefficient de proportionnalité entre une variation relative de la grandeur de suivi et une variation de la pression hydrostatique qui lui est directement appliquée.

9. Procédé de mesure selon l'une quelconque des revendications 1 à 8, dans lequel N zones de mesure (10) sont circonférentiellement réparties tous les $2\pi/N$ autour de l'axe longitudinal, N étant un entier strictement supérieur à 1 et, de préférence, N étant un nombre pair supérieur à 2, pour au moins deux zones de mesure (10) distinctes, les grandeurs de suivi correspondantes sont associées à des directions de mesure définissant, avec un plan normal à l'axe longitudinal, des angles de signe opposé modulo $\pi$.

10. Procédé de mesure selon l'une quelconque des revendications 1 à 9, dans lequel la mesure associée à la première direction de mesure et la mesure associée à la deuxième direction de mesure sont réalisées au niveau d'une même surface de la portion (12) de tuyau (4) sélectionnée parmi une surface interne et une surface externe de ladite portion (12) de tuyau (4).

11. Procédé de mesure selon l'une quelconque des revendications 1 à 10, comprenant, en outre, les étapes :

- mesure, au moyen d'un capteur de pression agencé dans le tuyau (4), d'une pression d'un fluide présent dans le tuyau (4), formant une pression de référence ; et
- calcul d'un paramètre d'endommagement à partir d'un écart entre la variation de la pression interne calculée et une variation concomitante de la pression de référence mesurée,

le procédé de mesure comprenant, avantageusement, la génération d'un signal d'alerte si le paramètre d'endommagement déterminé est en dehors d'une plage de tolérance prédéterminée.

12. Dispositif de mesure (2) d'une variation d'une pression interne d'un tuyau (4) comportant une portion (12) s'étendant le long d'un axe longitudinal, le dispositif de mesure (2) comprenant au moins deux capteurs (6, 6A, 6B) et un calculateur (8),

chaque capteur (6, 6A, 6B) étant configuré de façon à délivrer, pour une zone de mesure (10) correspondante de la portion (12) du tuyau (4), un signal de mesure indicatif d'une grandeur de suivi prédéterminée associée à une direction de mesure respective, une variation relative de la grandeur de suivi étant représentative d'une variation d'une déformation locale, suivant la direction de mesure associée, de la zone de mesure (10),
les capteurs (6, 6A, 6B) étant choisis de sorte qu'une même variation de température se traduise par une même variation relative de leurs grandeurs de suivi mesurées respectives,
le calculateur (8) étant configuré pour mesurer, à partir de chaque signal de mesure, la grandeur de suivi correspondante,
le calculateur (8) étant, en outre, configuré pour calculer la variation de la pression interne du tuyau (4) à partir d'au moins une variation de déformation, chaque variation de déformation étant uniquement obtenue à partir de grandeurs de suivi mesurées, parmi lesquelles au moins une première grandeur de suivi mesurée est associée à une première direction de mesure et au moins une deuxième grandeur de suivi mesurée est associée à une deuxième direction de mesure,
la première direction de mesure définissant un premier angle ($\Phi 1$) avec un plan normal à l'axe longitudinal, la deuxième direction de mesure définissant un deuxième angle ($\Phi 2$) avec un plan normal à l'axe longitudinal, le premier angle et le deuxième angle présentant des valeurs absolues différentes modulo $\pi$,
les capteurs (6, 6A, 6B) étant fixés à leurs zones de mesure (10) respectives suivant la même méthode de fixation, et étant choisis de sorte qu'une même variation d'une déformation mécanique qui leur est appliquée se traduise par une même variation relative de leurs grandeurs de suivi mesurées respectives, dans lequel le calculateur (8) est configuré pour effectuer la mesure d'une variation de pression interne du tuyau (4) et la portion (12) du tuyau (4) présente une forme de cylindre de révolution, chaque zone de mesure (10) appartenant à une section de la portion (12) du tuyau (4), le tuyau (4) étant fermé à ses extrémités,
la variation de la pression interne étant calculée selon :

$$\Delta P_{int}=\Delta P_{ext}+\frac{r_1^2 r_2^2}{r_{0,int}^2 r_{0,ext}^2}\left[\frac{E\left(\Delta\Psi_2-\Delta\Psi_1\right)\left(r_{0,ext}^2-r_{0,int}^2\right)}{\kappa_\varepsilon(1+\nu)\left[r_1^2\cos^2\left(\phi_2\right)-r_2^2\cos^2\left(\phi_1\right)\right]}+\frac{\cos^2\left(\phi_2\right)-\cos^2\left(\phi_1\right)}{\pi\left[r_1^2\cos^2\left(\phi_2\right)-r_2^2\cos^2\left(\phi_1\right)\right]}\delta F\right]$$

où $\Delta P_{int}$ est la variation de la pression interne ;
$\Delta\Psi_1$ et $\Delta\Psi_2$ sont respectivement une variation relative de la première grandeur de suivi et une variation relative de la deuxième grandeur de suivi ;
$r_{0,ext}$ est un rayon externe de la portion (12) du tuyau (4) ;
$r_{0,int}$ est un rayon interne de la portion (12) du tuyau (4) ;
$r_1$ est un rayon auquel est réalisée la mesure associée à la première direction de mesure ;
$r_2$ est un rayon auquel est réalisée la mesure associée à la deuxième direction de mesure ;
E est le module d'Young du matériau dans lequel la portion (12) du tuyau (4) est réalisée ;
$\nu$ est le coefficient de Poisson du matériau dans lequel la portion du tuyau est réalisée ;

$\phi_1$ et $\phi_2$ sont respectivement le premier angle et le deuxième angle ;

$\Delta P_{ext}$ une variation d'une pression externe appliquée à la portion (12) du tuyau (4) ;

$\delta F$ est une variation d'un effort longitudinal additionnel appliqué à la portion du tuyau, et distinct d'une variation d'un effort longitudinal exercé sur la portion (12) du tuyau (4) par la variation de pression interne et la variation de pression externe ; et

$\kappa_\varepsilon$ est une sensibilité mécanique des capteurs, égale à un coefficient de proportionnalité entre une variation relative de la grandeur de suivi et une variation de déformation mécanique qui leur est appliquée.

13. Installation (1) comprenant un tuyau (4) et un dispositif de mesure (2) selon la revendication 12, le tuyau (4) comportant une portion (12) s'étendant le long d'un axe longitudinal,

chaque capteur (6, 6A, 6B) du dispositif de mesure (2) étant associé à une zone de mesure (10) respective d'une surface externe de la portion (12) du tuyau (4), et étant agencé de façon à fournir une grandeur de suivi associée à une direction de mesure respective, une variation relative de la grandeur de suivi étant représentative d'une variation d'une déformation locale correspondante du tuyau (4) suivant la direction de mesure associée la première direction de mesure définissant le premier angle ($\Phi 1$) avec un plan normal à l'axe longitudinal, et la deuxième direction de mesure définissant le deuxième angle ($\Phi 2$) avec le plan normal à l'axe longitudinal, le premier angle et le deuxième angle présentant des valeurs absolues différentes modulo $\pi$.

**Patentansprüche**

1. Verfahren zum Messen einer Änderung eines Innendrucks eines Rohrs (4) mit einem Abschnitt (12), der sich entlang einer Längsachse erstreckt, wobei das Messverfahren folgende Schritte umfasst:

- für jeden von mindestens zwei Messbereichen (10) des Abschnitts (12) des Rohrs (4) mittels eines entsprechenden Sensors (6, 6A, 6B), Messen einer einer jeweiligen Messrichtung zugeordneten Verfolgungsgröße, wobei eine relative Änderung der Verfolgungsgröße repräsentativ für eine Änderung einer entsprechenden lokalen Verformung des Rohrs (4) entsprechend der zugeordneten Messrichtung ist; und
- Berechnen der Änderung des Innendrucks des Rohrs (4) aus mindestens einer Verformungsänderung, wobei jede Verformungsänderung nur aus gemessenen Verfolgungsgrößen erhalten wird, von denen mindestens eine erste gemessene Verfolgungsgröße einer ersten Messrichtung zugeordnet ist und mindestens eine zweite gemessene Verfolgungsgröße einer zweiten Messrichtung zugeordnet ist,

wobei die erste Messrichtung einen ersten Winkel ($\Phi 1$) mit einer Ebene normal zur Längsachse definiert, die zweite Messrichtung einen zweiten Winkel ($\Phi 2$) mit einer Ebene normal zur Längsachse definiert, wobei der erste Winkel und der zweite Winkel unterschiedliche absolute Werte des Modulo $\pi$ aufweisen, wobei die Sensoren (6, 6A, 6B) so gewählt sind, dass eine gleiche Änderung ihrer Temperatur zu einer gleichen relativen Änderung ihrer jeweiligen gemessenen Verfolgungsgrößen führt, wobei dem Messschritt eine Befestigung, an jedem Messbereich (10) des entsprechenden Sensors (6, 6A, 6B), vorausgeht, wobei die Sensoren (6, 6A, 6B) nach demselben Befestigungsverfahren an ihren jeweiligen Messbereichen (10) befestigt sind und so gewählt sind, dass eine gleiche Änderung einer ihnen aufgebrachten mechanischen Verformung zu einer gleichen relativen Änderung ihrer jeweiligen gemessenen Verfolgungsgrößen führt, wobei das Verfahren das Messen einer Änderungen des Innendrucks des Rohrs (4) durchführt und der Abschnitt (12) des Rohrs (4) eine Umdrehungszylinderform aufweist, wobei jeder Messbereich (10) zu einem Abschnitt des Abschnitts (12) des Rohrs (4) gehört, wobei das Rohr (4) an seinen Enden geschlossen ist, wobei die Änderung des Innendrucks nach Folgendem berechnet wird:

$$\Delta P_{int} = \Delta P_{ext} + \frac{r_1^2 r_2^2}{r_{0,int}^2 r_{0,ext}^2}\left[\frac{E(\Delta \Psi_2 - \Delta \Psi_1)(r_{0,ext}^2 - r_{0,int}^2)}{\kappa_\varepsilon(1+\nu)\left[r_1^2 \cos^2(\phi_2) - r_2^2 \cos^2(\phi_1)\right]} + \frac{\cos^2(\phi_2) - \cos^2(\phi_1)}{\pi\left[r_1^2 \cos^2(\phi_2) - r_2^2 \cos^2(\phi_1)\right]}\delta F\right]$$

wobei $\Delta P_{int}$ die Änderung des Innendrucks ist;

$\Delta \Psi_1$ und $\Delta \Psi_2$ jeweils eine relative Änderung der ersten Verfolgungsgröße und eine relative Änderung der zweiten Verfolgungsgröße sind;

$r_{0,ext}$ ein äußerer Radius des Abschnitts (12) des Rohrs (4) ist;

$r_{0,int}$ ein Innenradius des Abschnitts (12) des Rohrs (4) ist;

$r_1$ ein Radius ist, an dem die mit der ersten Messrichtung verbundene Messung durchgeführt wird;

$r_2$ ein Radius ist, an dem die Messung in der zweiten Messrichtung durchgeführt wird;

E der Young-Modul des Materials ist, aus dem der Abschnitt (12) des Rohrs (4) hergestellt ist;

v der Poisson-Koeffizient des Materials ist, aus dem der Abschnitt des Rohrs hergestellt ist;

$\phi_1$ und $\phi_2$ jeweils der erste Winkel und der zweite Winkel sind;

$\Delta P_{ext}$ eine Änderung eines Außendrucks, der auf den Abschnitt (12) des Rohrs (4) ausgeübt wird;

$\delta F$ eine Änderung einer zusätzlichen Längskraft ist, die auf den Abschnitt des Rohrs ausgeübt wird und sich von einer Änderung einer Längskraft unterscheidet, die auf den Abschnitt (12) des Rohrs (4) durch die Änderung des Innendrucks und die Änderung des Außendrucks ausgeübt wird; und

$K\varepsilon$ die mechanische Empfindlichkeit der Sensoren ist, die einem Proportionalitätskoeffizienten zwischen einer relativen Änderung der Verfolgungsgröße und einer mechanischen Verformungsänderung entspricht, die auf sie angewendet wird.

2. Messverfahren nach Anspruch 1, wobei für mindestens einen Messbereich (10) der entsprechende Sensor (6, 6A, 6B) ein Glasfasersegment (14) ist, in das ein Bragg-Netzwerk (16) eingetragen ist, wobei das Glasfasersegment (14) an dem Messbereich (10) befestigt ist, sodass sich das entsprechende Bragg-Netzwerk (16) entlang der mit dem Messbereich (10) verbundenen Messrichtung erstreckt,

wobei die mechanische Empfindlichkeit $K_\varepsilon$ wie folgt ausgedrückt wird:

$$\kappa_\varepsilon = \frac{1}{n_{eff}} \frac{\partial n_{eff}}{\partial \varepsilon_{mec}} + 1$$

wobei $n_{eff}$ ein effektiver Index des optischen Leiters der Glasfaser (18) ist; und
$\varepsilon_{mec}$ eine mechanische Längsverformung der Glasfaser (18) ist,
wobei die Verfolgungsgröße eine Reflexionswellenlänge jedes Bragg-Netzwerkes (16) ist.

3. Messverfahren nach Anspruch 2, wobei für mindestens zwei Messbereiche (12) die entsprechenden Glasfasersegmente (14) zu einer gleichen Glasfaser (18) gehören.

4. Messverfahren nach Anspruch 3, wobei die mit mindestens zwei Glasfasersegmenten (14) derselben Glasfaser (18) verbundenen Messachsen zusammen mit der Längsachse des Abschnitts (12) des Rohrs (4) in absoluten Werten, modulo $\pi$, getrennte Winkel bilden.

5. Messverfahren nach Anspruch 3 oder 4, wobei die Messbereiche (10), an denen mindestens zwei Glasfasersegmente (14) derselben Glasfaser (18) befestigt sind, entlang einer Generatorin des Abschnitts (12) des Rohrs (4) angeordnet sind.

6. Messverfahren nach einem der Ansprüche 1 bis 5, wobei für mindestens einen Messbereich (10) der Sensor (6, 6A, 6B) aus der Gruppe ausgewählt ist, die Abstandssensoren umfasst, wie zum Beispiel einen Sensor, der ein akustisches Verfahren zwischen einem akustischen Sender und einem akustischen Empfänger umsetzt, Sensoren, die ein Reflektometrieverfahren über ein elektrisches Kabel umsetzen, Sensoren, die ein optisches Reflektometrieverfahren umsetzen, Verformungsmessstreifen, wie elektrische Verformungsmessstreifen und Stereokorrelationsverformungssensoren.

7. Messverfahren nach einem der Ansprüche 1 bis 6, wobei der erste Winkel ($\Phi1$) 0 modulo $\pi$ ist und der zweite Winkel ($\Phi2$) $\pi/2$ modulo $\pi$ ist.

8. Messverfahren nach Anspruch 7, wobei das Verfahren die Messung einer Temperaturänderung des Rohrs (4) ermöglicht und der Abschnitt (12) des Rohrs (4) eine Umdrehungszylinderform aufweist, wobei jeder Messbereich (10) zu einem Abschnitt des Abschnitts (12) des Rohrs (4) gehört, wobei das Rohr (4) an seinen Enden geschlossen ist,

wobei die Temperaturänderung des Rohrs wie folgt berechnet wird:

$$\Delta T = \frac{r_1^2 r_2^2 (\Delta\Psi_1 - \Delta\Psi_2)(\kappa_\varepsilon(1-2\nu) - \kappa_P E)}{\kappa_T \kappa_\varepsilon (1+\nu) r_{0,ext}^2 [r_1^2 \cos^2(\phi_2) - r_2^2 \cos^2(\phi_1)]} + \frac{\Delta\Psi_1 r_1^2 \cos^2(\phi_2) - \Delta\Psi_2 r_2^2 \cos^2(\phi_1)}{\kappa_T[r_1^2\cos^2(\phi_2) - r_2^2\cos^2(\phi_1)]} + \frac{1}{\kappa_T}\left(\frac{1-2\nu}{E}\kappa_\varepsilon - \kappa_P\right)\Delta P_{ext}$$

$$+ \frac{\kappa_\varepsilon\left[(r_2^2-r_1^2)\left(\cos^2(\phi_1)+\cos^2(\phi_2)-2(1+\nu)\cos^2(\phi_1)\cos^2(\phi_2)\right)+(r_1^2+r_2^2)\left(\cos^2(\phi_1)-\cos^2(\phi_2)\right)\right]}{2\kappa_T\pi E(r_{0,ext}^2-r_{0,int}^2)[r_1^2\cos^2(\phi_2)-r_2^2\cos^2(\phi_1)]}\delta F$$

$$- \frac{1}{\kappa_T}\left(\frac{1-2\nu}{E}\kappa_\varepsilon - \kappa_P\right)\frac{r_1^2 r_2^2[\cos^2(\phi_2)-\cos^2(\phi_1)]}{\pi r_{0,ext}^2(r_{0,ext}^2-r_{0,int}^2)[r_1^2\cos^2(\phi_2)-r_2^2\cos^2(\phi_1)]}\delta F$$

$$+ \varepsilon_{surf}\frac{1}{\kappa_T}\left(\frac{\kappa_P}{\pi(r_{0,ext}^2-r_{0,int}^2)}\delta F - \frac{(\Delta\Psi_1-\Delta\Psi_2)\kappa_P E}{\kappa_\varepsilon(1+\nu)[\cos^2(\phi_2)-\cos^2(\phi_1)]}\right)$$

wobei $\Delta T$ die Temperaturänderung des Rohrs (4) ist;

$\Delta\Psi_1$ und $\Delta\Psi_2$ jeweils eine relative Änderung der ersten Verfolgungsgröße und eine relative Änderung der zweiten Verfolgungsgröße sind;

$r_{0,ext}$ ein äußerer Radius des Abschnitts (12) des Rohrs (4) ist;

$r_{0,int}$ ein Innenradius des Abschnitts (12) des Rohrs (4) ist;

$r_1$ ein Radius ist, an dem die mit der ersten Messrichtung verbundene Messung durchgeführt wird;

$r_2$ ein Radius ist, an dem die Messung in der zweiten Messrichtung durchgeführt wird;

$\varepsilon_{surf}$ ein Parameter, der den Wert 1 annimmt, wenn $r_1$ und $r_2$ beide gleich $r_{0,int}$ sind oder beide gleich $r_{0,ext}$ sind und in den anderen Fällen den Wert 0;

E der Young-Modul des Materials ist, aus dem der Abschnitt (12) des Rohrs (4) hergestellt ist;

$\nu$ der Poisson-Koeffizient des Materials ist, aus dem der Abschnitt (12) des Rohrs (4) hergestellt ist;

$\phi_1$ und $\phi_2$ jeweils der erste Winkel und der zweite Winkel sind;

$\Delta P_{ext}$ eine Änderung eines Außendrucks ist, der auf den Abschnitt (12) des Rohrs (4) ausgeübt wird;

$\delta F$ eine Änderung einer zusätzlichen Längskraft ist, die auf den Abschnitt (12) des Rohrs (4) ausgeübt wird und sich von einer Änderung einer Längskraft unterscheidet, die auf den Abschnitt (12) des Rohrs (4) durch die Änderung des Innendrucks und die Änderung des Außendrucks ausgeübt wird;

$K_\varepsilon$ eine mechanische Empfindlichkeit der Sensoren (6, 6A, 6B) ist, die einem Proportionalitätskoeffizienten zwischen einer relativen Änderung der Verfolgungsgröße und einer mechanischen Verformungsänderung entspricht;

$K_T$ eine thermische Empfindlichkeit der Sensoren (6, 6A, 6B) ist, die einem Proportionalitätskoeffizienten zwischen einer relativen Änderung der Verfolgungsgröße und einer Änderung ihrer Temperatur entspricht; und

$K_P$ eine inhärente Empfindlichkeit gegenüber dem hydrostatischen Druck des Sensors (6, 6A, 6B) allein ist, wobei die Empfindlichkeit gleich einem Proportionalitätskoeffizienten zwischen einer relativen Änderung der Überwachungsgröße und einer Änderung des hydrostatischen Drucks ist, der direkt auf ihn angewendet wird.

9. Messverfahren nach einem der Ansprüche 1 bis 8, bei dem N Messbereiche (10) in Umfangsrichtung alle $2\pi/N$ um die Längsachse verteilt sind, wobei N eine ganze Zahl größer als 1 ist und vorzugsweise N eine gerade Zahl größer als 2 ist, wobei für mindestens zwei unterschiedliche Messbereiche (10) die entsprechenden Verfolgungsgrößen Messrichtungen zugeordnet sind, die mit einer zur Längsachse senkrechten Ebene Winkel mit entgegengesetztem Vorzeichen modulo $\pi$ definieren.

10. Messverfahren nach einem der Ansprüche 1 bis 9, wobei die mit der ersten Messrichtung verbundene Messung und die mit der zweiten Messrichtung verbundene Messung an derselben Oberfläche des Abschnitts (12) des Rohrs (4) durchgeführt werden, die aus einer Innenfläche und einer Außenfläche des Abschnitts (12) des Rohrs (4) ausgewählt ist.

11. Messverfahren nach einem der Ansprüche 1 bis 10, ferner umfassend folgende Schritte:

- Messen eines Druckes eines im Rohr (4) vorhandenen Fluids mittels eines im Rohr (4) angeordneten Drucksensors, wodurch ein Referenzdruck gebildet wird; und
- Berechnen eines Schädigungsparameters aus einer Abweichung zwischen der Änderung des berechneten Innendrucks und einer gleichzeitigen Änderung des gemessenen Referenzdrucks,

wobei das Messverfahren vorteilhafterweise das Erzeugen eines Warnsignals umfasst, wenn der ermittelte Schädigungsparameter außerhalb eines vorbestimmten Toleranzbereichs liegt.

**12.** Messvorrichtung (2) für eine Änderung eines Innendrucks eines Rohrs (4) mit einem Abschnitt (12), der sich entlang einer Längsachse erstreckt, wobei die Messvorrichtung (2) mindestens zwei Sensoren (6, 6A, 6B) und ein Steuergerät (8) umfasst,

wobei jeder Sensor (6, 6A, 6B) so eingerichtet ist, dass er für einen entsprechenden Messbereich (10) des Abschnitts (12) des Rohrs (4), ein indikatives Messsignal einer vorbestimmten Verfolgungsgröße, die einer jeweiligen Messrichtung zugeordnet ist, liefert, wobei eine relative Änderung der Verfolgungsgröße repräsentativ für eine Änderung einer lokalen Verformung, entsprechend der zugehörigen Messrichtung, des Messbereichs (10) ist,

wobei die Sensoren (6, 6A, 6B) so ausgewählt sind, dass eine gleiche Temperaturänderung zu einer gleichen relativen Änderung ihrer jeweiligen gemessenen Verfolgungsgrößen führt,

wobei das Steuergerät (8) so eingerichtet ist, dass es aus jedem Messsignal die entsprechende Verfolgungsgröße misst,

wobei das Steuergerät (8) ferner so eingerichtet ist, dass es die Änderung des Innendrucks des Rohrs (4) ausgehend von mindestens einer Verformungsänderung berechnet, wobei jede Verformungsänderung nur aus gemessenen Verfolgungsgrößen erhalten wird, von denen mindestens eine erste gemessene Verfolgungsgröße einer ersten Messrichtung zugeordnet ist und mindestens eine zweite gemessene Verfolgungsgröße einer zweiten Messrichtung zugeordnet ist,

wobei die erste Messrichtung einen ersten Winkel ($\Phi 1$) mit einer Ebene normal zur Längsachse definiert, die zweite Messrichtung einen zweiten Winkel ($\Phi 2$) mit einer Ebene normal zur Längsachse definiert, wobei der erste Winkel und der zweite Winkel unterschiedliche absolute Werte modulo $\pi$ aufweisen,

wobei die Sensoren (6, 6A, 6B) nach demselben Befestigungsverfahren an ihren jeweiligen Messbereichen (10) befestigt sind und so ausgewählt sind, dass eine gleiche Änderung einer ihnen aufgebrachten mechanischen Verformung zu einer gleichen relativen Änderung ihrer jeweiligen gemessenen Verfolgungsgrößen führt, wobei das Steuergerät (8) so eingerichtet ist, dass es eine Messung einer Änderung des Innendrucks des Rohrs (4) durchführt, und der Abschnitt (12) des Rohrs (4) eine Umdrehungszylinderform aufweist, wobei jeder Messbereich (10) zu einem Abschnitt des Abschnitts (12) des Rohrs (4) gehört, wobei das Rohr (4) an seinen Enden geschlossen ist,

wobei die Änderung des Innendrucks nach Folgendem berechnet wird:

$$\Delta P_{int} = \Delta P_{ext} + \frac{r_1^2 r_2^2}{r_{0,int}^2 r_{0,ext}^2} \left[ \frac{E(\Delta\Psi_2 - \Delta\Psi_1)\left(r_{0,ext}^2 - r_{0,int}^2\right)}{\kappa_\varepsilon(1+v)\left[r_1^2\cos^2(\phi_2) - r_2^2\cos^2(\phi_1)\right]} + \frac{\cos^2(\phi_2) - \cos^2(\phi_1)}{\pi\left[r_1^2\cos^2(\phi_2) - r_2^2\cos^2(\phi_1)\right]} \delta F \right]$$

wobei $\Delta P_{int}$ die Änderung des Innendrucks ist;

$\Delta\Psi_1$ und $\Delta\Psi_2$ jeweils eine relative Änderung der ersten Verfolgungsgröße und eine relative Änderung der zweiten Verfolgungsgröße sind;

$r_{0,ext}$ ein äußerer Radius des Abschnitts (12) des Rohrs (4) ist;

$r_{0,int}$ ein Innenradius des Abschnitts (12) des Rohrs (4) ist;

$r_1$ ein Radius ist, an dem die mit der ersten Messrichtung verbundene Messung durchgeführt wird;

$r_2$ ein Radius ist, an dem die Messung in der zweiten Messrichtung durchgeführt wird;

E der Young-Modul des Materials ist, aus dem der Abschnitt (12) des Rohrs (4) hergestellt ist;

v der Poisson-Koeffizient des Materials ist, aus dem der Abschnitt des Rohrs hergestellt ist;

$\phi_1$ und $\phi_2$ jeweils der erste Winkel und der zweite Winkel sind;

$\Delta P_{ext}$ eine Änderung eines Außendrucks ist, der auf den Abschnitt (12) des Rohrs (4) ausgeübt wird;

$\delta F$ eine Änderung einer zusätzlichen Längskraft ist, die auf den Abschnitt des Rohrs ausgeübt wird und sich von einer Änderung einer Längskraft unterscheidet, die auf den Abschnitt (12) des Rohrs (4) durch die Änderung des Innendrucks und die Änderung des Außendrucks ausgeübt wird; und

$K_\varepsilon$ die mechanische Empfindlichkeit der Sensoren ist, die einem Proportionalitätskoeffizienten zwischen einer relativen Änderung der Verfolgungsgröße und einer mechanischen Verformungsänderung entspricht, die auf sie angewendet wird.

**13.** Anlage (1), umfassend ein Rohr (4) und eine Messvorrichtung (2) nach Anspruch 12, wobei das Rohr (4) einen Abschnitt (12) umfasst, der sich entlang einer Längsachse erstreckt,

wobei jeder Sensor (6, 6A, 6B) der Messvorrichtung (2) mit einem jeweiligen Messbereich (10) einer Außenfläche des Abschnitts (12) des Rohrs (4) verbunden ist und so angeordnet ist, dass er eine mit einer jeweiligen Messrichtung verbundene Verfolgungsgröße bereitstellt, wobei eine relative Änderung der Verfolgungsgröße repräsentativ für eine Änderung einer entsprechenden lokalen Verformung des Rohrs (4) entlang der Messrichtung ist, die mit der ersten Messrichtung verbunden ist, die den ersten Winkel (Φ1) mit einer Ebene, die normal zur Längsachse ist, definiert, und die zweite Messrichtung, die den zweiten Winkel (Φ2) mit der Ebene, die normal zur Längsachse ist, definiert, wobei der erste Winkel und der zweite Winkel unterschiedliche absolute Werte modulo $\pi$ aufweisen.

**Claims**

1. A method for measuring a variation in an internal pressure of a pipe (4) including a portion (12) extending along a longitudinal axis, the measurement method comprising the steps of:

   - for each of at least two measurement areas (10) of the portion (12) of the pipe (4), measuring, by means of a corresponding sensor (6, 6A, 6B), a monitoring quantity associated with a respective measurement direction, a relative variation in the monitoring quantity being representative of a variation in a corresponding local deformation of the pipe (4) according to the associated measurement direction; and
   - calculating the variation in the internal pressure of the pipe (4) based on at least one deformation variation, each deformation variation being obtained only based on measured monitoring quantities, among which at least one first measured monitoring quantity is associated with a first measurement direction and at least one second measured monitoring quantity is associated with a second measurement direction,

      the first measurement direction defining a first angle ($\phi$1) with a plane normal to the longitudinal axis, the second measurement direction defining a second angle ($\phi$2) with a plane normal to the longitudinal axis, the first angle and the second angle having different absolute values modulo $\pi$,
      the sensors (6, 6A, 6B) being selected so that the same variation in their temperature results in the same relative variation in their respective measured monitoring quantities, wherein the measurement step is preceded by fastening the corresponding sensor (6, 6A, 6B) to each measurement area (10),
      the sensors (6, 6A, 6B) being fastened to their respective measurement areas (10) according to the same fastening method, and being selected so that the same variation in a mechanical deformation applied thereto results in the same relative variation in their respective measured monitoring quantities, wherein the method allows measuring a variation in the internal pressure of the pipe (4) and the portion (12) of the pipe (4) has an axisymmetric cylindrical shape, each measurement area (10) belonging to a section of the portion (12) of the pipe (4), the pipe (4) being closed at its ends,
      the variation of the internal pressure being calculated according to:

$$\Delta P_{int}=\Delta P_{ext}+\frac{r_1^2 r_2^2}{r_{0,int}^2 r_{0,ext}^2}\left[\frac{E(\Delta\Psi_2-\Delta\Psi_1)(r_{0,ext}^2-r_{0,int}^2)}{\kappa_\varepsilon(1+\nu)\left[r_1^2\cos^2(\phi_2)-r_2^2\cos^2(\phi_1)\right]}+\frac{\cos^2(\phi_2)-\cos^2(\phi_1)}{\pi\left[r_1^2\cos^2(\phi_2)-r_2^2\cos^2(\phi_1)\right]}\delta F\right]$$

      where $\Delta P_{int}$ is the variation of the internal pressure;
      $\Delta\Psi_1$ and $\Delta\Psi_2$ are respectively a relative variation of the first monitoring quantity and a relative variation of the second monitoring quantity;
      $r_{0,ext}$ is an outer radius of the portion (12) of the pipe (4);
      $r_{0,int}$ is an inner radius of the portion (12) of the pipe (4);
      $r_1$ is a radius at which the measurement associated with the first measurement direction is performed;
      $r_2$ is a radius at which the measurement associated with the second measurement direction is performed;
      E is the Young's modulus of the material in which the portion (12) of the pipe (4) is made;
      $\nu$ is the Poisson's ratio of the material in which the portion of the pipe is made;
      $\phi_1$ and $\phi_2$ are respectively the first angle and the second angle;
      $\Delta P_{ext}$ a variation in an external pressure applied to the portion (12) of the pipe (4);
      $\delta F$ is a variation in an additional longitudinal force applied to the portion of the pipe, and distinct from a variation in a longitudinal force exerted on the portion (12) of the pipe (4) by the internal pressure variation and the external pressure variation; and
      $\kappa_\varepsilon$ is a mechanical sensitivity of the sensors, equal to a proportionality coefficient between a relative variation in the monitoring quantity and a variation in the mechanical deformation applied thereto.

2. The measurement method according to claim 1, wherein, for at least one measurement area (10), the corresponding sensor (6, 6A, 6B) is an optical fibre segment (14) in which a Bragg grating (16) is inscribed, the optical fibre segment (14) being fastened to the measurement area (10) so that the corresponding Bragg grating (16) extends along the measurement direction associated with said measurement area (10),

the mechanical sensitivity $\kappa_\varepsilon$ being expressed as:

$$\kappa_\varepsilon = \frac{1}{n_{eff}} \frac{\partial n_{eff}}{\partial \varepsilon_{mec}} + 1$$

wherein $n_{eff}$ is an effective index of the optical guide of the optical fibre (18); and
$\varepsilon_{mec}$ is a longitudinal mechanical deformation of the optical fibre (18),
the monitoring quantity being a reflection wavelength of each Bragg grating (16).

3. The measurement method according to claim 2, wherein, for at least two measurement areas (12), the corresponding optical fibre segments (14) belong to a same optical fibre (18).

4. The measurement method according to claim 3, wherein the measurement axes associated with at least two optical fibre segments (14) of the same optical fibre (18) form, with the longitudinal axis of the portion (12) of the pipe (4), angles that are distinct, in absolute values, modulo $\pi$.

5. The measurement method according to claim 3 or 4, wherein the measurement areas (10), on which at least two optical fibre segments (14) of the same optical fibre (18) are fastened, are arranged along a generatrix of the portion (12) of the pipe.

6. The measurement method according to any one of claims 1 to 5, wherein, for at least one measurement area (10), the sensor (6, 6A, 6B) is selected from the group comprising distance sensors such as a sensor implementing an acoustic method between an acoustic emitter and an acoustic receiver, the sensors implementing a reflectometry method on an electrical cable, the sensors implementing an optical reflectometry method, the deformation gauges, such as the electrical deformation gauges, and the stereo-correlation deformation sensors.

7. The measurement method according to any one of claims 1 to 6, wherein the first angle ($\phi 1$) amounts to 0 modulo $\pi$, and the second angle ($\phi 2$) amounts to $\pi/2$ modulo $\pi$.

8. The measurement method according to claim 7, wherein the method enables the measurement of a variation in the temperature of the pipe (4) and the portion (12) of the pipe (4) has an axisymmetric cylindrical shape, each measurement area (10) belonging to a section of the portion (12) of the pipe (4), the pipe (4) being closed at its ends,

the variation in the temperature of the pipe being calculated according to:

$$\Delta T = \frac{r_1^2 r_2^2 (\Delta\Psi_1 - \Delta\Psi_2)(\kappa_\varepsilon(1-2\nu) - \kappa_P E)}{\kappa_T \kappa_\varepsilon (1+\nu) r_{0,ext}^2 \left[r_1^2 \cos^2(\phi_2) - r_2^2 \cos^2(\phi_1)\right]} + \frac{\Delta\Psi_1 r_1^2 \cos^2(\phi_2) - \Delta\Psi_2 r_2^2 \cos^2(\phi_1)}{\kappa_T \left[r_1^2 \cos^2(\phi_2) - r_2^2 \cos^2(\phi_1)\right]} + \frac{1}{\kappa_T}\left(\frac{1-2\nu}{E}\kappa_\varepsilon - \kappa_P\right)\Delta P_{ext}$$

$$+ \frac{\kappa_\varepsilon \left[(r_2^2 - r_1^2)\left(\cos^2(\phi_1) + \cos^2(\phi_2) - 2(1+\nu)\cos^2(\phi_1)\cos^2(\phi_2)\right) + (r_1^2 + r_2^2)\left(\cos^2(\phi_1) - \cos^2(\phi_2)\right)\right]}{2\kappa_T \pi E \left(r_{0,ext}^2 - r_{0,int}^2\right)\left[r_1^2 \cos^2(\phi_2) - r_2^2 \cos^2(\phi_1)\right]}\delta F$$

$$- \frac{1}{\kappa_T}\left(\frac{1-2\nu}{E}\kappa_\varepsilon - \kappa_P\right)\frac{r_1^2 r_2^2 \left[\cos^2(\phi_2) - \cos^2(\phi_1)\right]}{\pi r_{0,ext}^2 \left(r_{0,ext}^2 - r_{0,int}^2\right)\left[r_1^2 \cos^2(\phi_2) - r_2^2 \cos^2(\phi_1)\right]}\delta F$$

$$+ \epsilon_{surf}\frac{1}{\kappa_T}\left(\frac{\kappa_P}{\pi\left(r_{0,ext}^2 - r_{0,int}^2\right)}\delta F - \frac{(\Delta\Psi_1 - \Delta\Psi_2)\kappa_P E}{\kappa_\varepsilon(1+\nu)\left[\cos^2(\phi_2) - \cos^2(\phi_1)\right]}\right)$$

where $\Delta T$ is the variation in the temperature of the pipe (4);
$\Delta\Psi_1$ and $\Delta\Psi_2$ are respectively a relative variation of the first monitoring quantity and a relative variation of the second monitoring quantity;
$r_{0,ext}$ is an outer radius of the portion (12) of the pipe (4);
$r_{0,int}$ is an inner radius of the portion (12) of the pipe (4);
$r_1$ is a radius at which the measurement associated with the first measurement direction is performed;
$r_2$ is a radius at which the measurement associated with the second measurement direction is performed;

$\varepsilon_{surf}$ is a parameter that takes the value 1 when $r_1$ and $r_2$ are both equal to $r_{0,int}$ or both equal to $r_{0,ext}$ and the value 0 in the other cases;

E is the Young's modulus of the material in which the portion (12) of the pipe (4) is made;

v is the Poisson's ratio of the material in which the portion (12) of the pipe (4) is made;

$\phi_1$ and $\phi_2$ are respectively the first angle and the second angle;

$\Delta P_{ext}$ is a variation in an external pressure applied to the portion (12) of the pipe (4);

$\delta F$ is a variation in an additional longitudinal force applied to the portion (12) of the pipe (4) and distinct from a variation in a longitudinal force exerted on the portion (12) of the pipe (4) by the internal pressure variation and the external pressure variation;

$\kappa_\varepsilon$ is a mechanical sensitivity of the sensors (6, 6A, 6B), equal to a proportionality coefficient between a relative variation in the monitoring quantity and a mechanical deformation variation;

$\kappa_T$ is a thermal sensitivity of the sensors (6, 6A, 6B), equal to a proportionality coefficient between a relative variation in the monitoring quantity and a variation in their temperature; and

$K_P$ is a sensitivity intrinsic to the hydrostatic pressure of the sensor (6, 6A, 6B) alone, said sensitivity being equal to a proportionality coefficient between a relative variation in the monitoring quantity and a variation in the pressure hydrostatic that is directly applied thereto.

9. The measurement method according to any one of claims 1 to 8, wherein N measurement areas (10) are circumferentially distributed every $2\pi/N$ around the longitudinal axis, N being an integer strictly greater than 1 and, preferably, N being an even number greater than 2, for at least two distinct measurement areas (10), the corresponding monitoring quantities are associated with measurement directions defining, with a plane normal to the longitudinal axis, angle having opposite signs modulo $\pi$.

10. The measurement method according to any one of claims 1 to 9, wherein the measurement associated with the first measurement direction and the measurement associated with the second measurement direction are performed at the same surface of the portion (12) of the pipe (4) selected from among an inner surface and an outer surface of said portion (12) of the pipe (4).

11. The measurement method according to any one of claims 1 to 10, further comprising the steps of:

   - measuring, by means of a pressure sensor arranged in the pipe (4), a pressure of a fluid present in the pipe (4), forming a reference pressure; and
   - calculating a damage parameter based on a discrepancy between the variation in the calculated internal pressure and a concomitant variation in the measured reference pressure,

   the measurement method advantageously comprising generating an alert signal if the determined damage parameter is outside a predetermined tolerance range.

12. A device (2) for measuring a variation in an internal pressure of a pipe (4) including a portion (12) extending along a longitudinal axis, the measurement device (2) comprising at least two sensors (6, 6A, 6B) and a calculator (8),

   each sensor (6, 6A, 6B) being configured so as to output, for a corresponding measurement area (10) of the portion (12) of the pipe (4), a measurement signal indicative of a predetermined monitoring quantity associated with a respective measurement direction, a relative variation in the monitoring quantity being representative of a variation in a local deformation, according to the associated measurement direction, of the measurement area (10),

   the sensors (6, 6A, 6B) being selected so that same temperature variation results in the same relative variation in their respective measured monitoring quantities,

   the calculator (8) being configured to measure the corresponding monitoring quantity based on each measurement signal,

   the calculator (8) being further configured to calculate the variation in the internal pressure of the pipe (4) based on at least one deformation variation, each deformation variation being obtained only from the measured monitoring quantities, among which at least one first measured monitoring quantity is associated with a first measurement direction and at least one second measured monitoring quantity is associated with a second measurement direction,

   the first measurement direction defining a first angle ($\phi$1) with a plane normal to the longitudinal axis, the second measurement direction defining a second angle ($\phi$2) with a plane normal to the longitudinal axis, the first angle and the second angle having different absolute values modulo $\pi$,

the sensors (6, 6A, 6B) being fastened to their respective measurement areas (10) according to the same fastening method, and being selected so that the same variation in a mechanical deformation applied thereto results in the same relative variation in their respective measured monitoring quantities, wherein the calculator (8) is configured to allow measuring a variation in the internal pressure of the pipe (4) and the portion (12) of the pipe (4) has an axisymmetric cylindrical shape, each measurement area (10) belonging to a section of the portion (12) of the pipe (4), the pipe (4) being closed at its ends,

the variation of the internal pressure being calculated according to:

$$\Delta P_{int} = \Delta P_{ext} + \frac{r_1^2 r_2^2}{r_{0,int}^2 r_{0,ext}^2} \left[ \frac{E(\Delta\Psi_2 - \Delta\Psi_1)\left(r_{0,ext}^2 - r_{0,int}^2\right)}{\kappa_\varepsilon(1+\nu)\left[r_1^2\cos^2(\phi_2) - r_2^2\cos^2(\phi_1)\right]} + \frac{\cos^2(\phi_2) - \cos^2(\phi_1)}{\pi\left[r_1^2\cos^2(\phi_2) - r_2^2\cos^2(\phi_1)\right]} \delta F \right]$$

where $\Delta P_{int}$ is the variation of the internal pressure;

$\Delta\Psi_1$ and $\Delta\Psi_2$ are respectively a relative variation of the first monitoring quantity and a relative variation of the second monitoring quantity;

$r_{0,ext}$ is an outer radius of the portion (12) of the pipe (4);

$r_{0,int}$ is an inner radius of the portion (12) of the pipe (4);

$r_1$ is a radius at which the measurement associated with the first measurement direction is performed;

$r_2$ is a radius at which the measurement associated with the second measurement direction is performed;

E is the Young's modulus of the material in which the portion (12) of the pipe (4) is made;

ν is the Poisson's ratio of the material in which the portion of the pipe is made;

$\phi_1$ and $\phi_2$ are respectively the first angle and the second angle;

$\Delta P_{ext}$ a variation in an external pressure applied to the portion (12) of the pipe (4);

$\delta F$ is a variation in an additional longitudinal force applied to the portion of the pipe, and distinct from a variation in a longitudinal force exerted on the portion (12) of the pipe (4) by the internal pressure variation and the external pressure variation; and

$\kappa_\varepsilon$ is a mechanical sensitivity of the sensors, equal to a proportionality coefficient between a relative variation in the monitoring quantity and a variation in the mechanical deformation applied thereto.

13. An apparatus (1) comprising a pipe (4) and a measurement device (2) according to claim 12, the pipe (4) including a portion (12) extending along a longitudinal axis,

each sensor (6, 6A, 6B) of the measurement device (2) being associated with a respective measuring area (10) of an outer surface of the portion (12) of the pipe (4), and being arranged so as to provide a monitoring quantity associated with a respective measurement direction, a relative variation in the monitoring quantity being representative of a variation in a corresponding local deformation of the pipe (4) according to the associated measurement direction

the first measurement direction defining the first angle ($\phi 1$) with a plane normal to the longitudinal axis, and the second measurement direction defining the second angle ($\phi 2$) with the plane normal to the longitudinal axis, the first angle and the second angle having different absolute values modulo $\pi$.

FIG. 1

FIG. 2

FIG. 3

**RÉFÉRENCES CITÉES DANS LA DESCRIPTION**

**Documents brevets cités dans la description**

- FR 2864202 B1

- US 2420148 A